(19) Europäisches Patentamt / European Patent Office / Office européen des brevets

(11) **EP 2 958 758 B1**

(12) **FASCICULE DE BREVET EUROPEEN**


(45) Date de publication et mention de la délivrance du brevet:
**07.06.2017 Bulletin 2017/23**

(21) Numéro de dépôt: **14706295.4**

(22) Date de dépôt: **21.02.2014**

(51) Int Cl.:
***B60C 19/12*** *(2006.01)* ***B60C 9/09*** *(2006.01)*

(86) Numéro de dépôt international:
**PCT/EP2014/053391**

(87) Numéro de publication internationale:
**WO 2014/128241 (28.08.2014 Gazette 2014/35)**


(54) **PNEUMATIQUE AUTO-OBTURANT COMPORTANT UNE ARMATURE DE FLANC SUPPLEMENTAIRE**

SELBSTDICHTENDER REIFEN MIT ZUSÄTZLICHER SEITENWANDVERSTÄRKUNG

SELF-SEALING TYRE COMPRISING AN ADDITIONAL SIDEWALL REINFORCEMENT


(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.02.2013 FR 1351610**

(43) Date de publication de la demande:
**30.12.2015 Bulletin 2015/53**



(73) Titulaires:
- **Compagnie Générale des Etablissements Michelin**
  **63000 Clermont-Ferrand (FR)**
- **Michelin Recherche et Technique S.A.**
  **1763 Granges-Paccot (CH)**

(72) Inventeur: **MUHLHOFF, Olivier**
**F-63040 Clermont-Ferrand Cedex 9 (FR)**

(74) Mandataire: **Millanvois, Patrick Jacques Jean**
**Manufacture Française**
**des Pneumatiques Michelin**
**23, place des Carmes - Déchaux**
**DGD/PI - F35 - Ladoux**
**63040 Clermont-Ferrand Cedex 9 (FR)**


(56) Documents cités:
**WO-A1-2008/080557**
**FR-A1- 2 978 447**
**US-A- 3 509 930**
**US-A- 5 435 370**
**US-A1- 2008 006 359**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

DOMAINE DE L'INVENTION

La présente invention concerne les pneumatiques pour véhicules comportant des armatures de carcasse textiles. Elle concerne plus particulièrement les armatures de carcasse de ces pneumatiques, et notamment les armatures de carcasse de pneumatiques adaptés pour procurer une mobilité étendue au véhicule qui en est équipé.

ARRIERE-PLAN

Un pneumatique subit, au cours de sa vie, un grand nombre d'agressions de nature différente, comme par exemple des perforations ou des chocs violents.

Lors d'une perforation d'un pneumatique par un objet perforant tel une vis ou un clou, ou « crevaison », l'air de gonflage du pneumatique peut s'échapper par la perforation et la perte de pression consécutive entraîner une mise à plat du pneumatique et nécessiter l'arrêt du véhicule.

Ce problème date du début même de l'utilisation des roues chaussées de pneumatiques gonflés ; la solution traditionnelle est d'arrêter le véhicule et de remplacer la roue concernée par une roue de secours.

D'autres solutions ont été imaginées et sont disponibles sur le marché pour éviter d'avoir à utiliser une roue de secours.

Le document US 5916931 présente un récipient aérosol comportant une émulsion aqueuse de latex mélangée avec différents produits dont des produits fibreux et un gaz propulseur. En cas de pneumatique à plat, ce récipient est fixé à la valve du pneumatique et la cavité interne du pneumatique est remplie par le gaz propulseur et l'émulsion d'obturation / réparation. Le pneumatique est alors regonflé au moins partiellement, l'émulsion colmate la perforation et on peut recommencer à rouler, à vitesse réduite d'abord pour bien répartir l'émulsion sur toute la surface interne du pneumatique puis normalement.

Certains constructeurs automobiles proposent des kits de réparation en lieu et place d'une roue de secours. Cela a pour intérêt de réduire le poids de la voiture, donc sa consommation de carburant et de libérer de l'espace sous le plancher du coffre.

Les kits de réparation des pneumatiques ainsi que les bombes aérosol ne sont que des réparations temporaires. Il convient de ne pas dépasser une vitesse donnée de l'ordre de 80 km/h et de faire contrôler ou changer le pneumatique rapidement.

Les manufacturiers de pneumatiques ont aussi proposé des pneumatiques pourvus sur leur surface intérieure ou dans leur structure d'une couche de produits élastiques, visqueux ou pâteux, appelés « produits auto-obturants », permettant une obturation des perforations. Le document WO 2008/080556 A1 présente un exemple d'un tel pneumatique. Ces pneumatiques ne sont pas en tant que tel increvables, mais les perforations sont normalement refermées ou obturées par le produit auto-obturant. Par rapport aux bombes anti-crevaison, ces pneumatiques équipés d'une couche de produit auto-obturant ont l'avantage de ne pas nécessiter d'arrêt du véhicule. En revanche, lorsque les objets perforants ont une taille trop importante ou lorsque les perforations se situent en dehors des zones en regard des couches de produit auto-obturants, il n'y a aucun effet auto-obturant.

Les manufacturiers de pneumatiques ont aussi imaginé d'introduire des éléments de renforts structurels dans l'ensemble pneumatique/roue afin de permettre au pneumatique de continuer à rouler en cas d'une perte de pression liée à une crevaison. Ces éléments de renforts peuvent être placés dans la structure du pneumatique, comme dans le document WO 2002/030689 A1, on parle alors de pneumatique autoporteur, ou constituer un appui de soutien comme proposé dans le document EP 0 673 324 B1. Les pneumatiques autoporteurs et les appuis de soutien permettent à un véhicule qui en est équipé de continuer à rouler, au moins sur une distance limitée et à vitesse réduite, quelle que soit la gravité de la crevaison. En revanche, ces solutions sont coûteuses et entraînent, lors d'un usage normal du véhicule, une dégradation de certaines des performances des pneumatiques, telles le confort ou la résistance ou roulement.

Mais la perforation n'est pas le seul mode d'endommagement d'un pneumatique qui roule sur une chaussée. Le pneumatique peut notamment subir des chocs au niveau de la bande de roulement ou des flancs, dont la fréquence et l'intensité sont souvent considérables. C'est une des fonctions principales d'un pneumatique que d'encaisser ces chocs et de les amortir sans que la roue du véhicule concernée en soit sensiblement affectée, ni dans son mouvement ni dans son intégrité.

Il arrive toutefois que cette faculté d'encaissement rencontre ses limites lorsque les conditions d'impact sont telles que le flanc impacté arrive en butée à l'intérieur de la chambre pneumatique, soit directement contre la jante sur laquelle est monté le pneu, soit plus habituellement contre une autre zone du flanc qui est elle-même en appui direct sur la jante de roue. C'est notamment le cas quand la jante comporte une saillie radiale externe par rapport au siège proprement dit. Une telle saillie (habituellement appelée « crochet de jante ») est en général prévue pour empêcher le bourrelet pneumatique de déjanter sous l'effet de contraintes de direction axiale au cours des manoeuvres de la roue.

L'impact avec l'obstacle peut alors transmettre des efforts brefs mais très intenses, pouvant atteindre dans certains cas plusieurs tonnes, aux pièces en butée mais aussi, au-delà de la jante, aux attaches de suspension mécaniques de l'ensemble de roue, voire à la caisse du véhicule. Elles sont susceptibles de créer des dommages graves aux organes de la suspension et de déformer de façon permanente la caisse du véhicule. Les concepteurs de véhicules sont donc amenés à prévoir

des systèmes d'amortissement suffisants pour prévenir ces dommages et à dimensionner la caisse des véhicules en fonction des cas extrêmes normalement prévisibles.

Malheureusement, même quand le véhicule proprement dit est convenablement protégé, le pneumatique soumis à ce type d'incident est susceptible de souffrir des conséquences du phénomène qui vient d'être évoqué. Dans la section impactée par le choc, le flanc du pneumatique se trouve soudainement replié et pincé entre l'obstacle et le crochet de jante (« pinch shock »). Ceci peut entrainer la rupture du flanc et le pneumatique perd sa pression de gonflage, ce qui, la plupart du temps, implique l'immobilisation immédiate du véhicule. Mais même lorsque le pneumatique résiste, ses composants peuvent avoir été détériorés par l'incident ; des renflements dans les flancs ou d'autres signes indiquent à l'expert que la structure du pneumatique a été affaiblie et que son flanc risque de se rompre sous l'effet des flexions répétées de ses composants, à plus ou moins long terme.

Plusieurs pistes ont été proposées pour renforcer les pneumatiques par rapport à ce phénomène de « pinch shock ». Dans la plupart de ces pneumatiques, l'armature de carcasse est ancrée dans le bourrelet par le moyen d'un retournement autour d'une structure annulaire de renforcement prévue dans le bourrelet. L'armature de carcasse comporte alors un « brin aller » qui s'étend d'un bourrelet à l'autre, en traversant le sommet du pneumatique, et deux « brins retour » qui s'étendent de la structure annulaire de renforcement radialement vers l'extérieur. Pour renforcer un pneumatique par rapport au « pinch shock », il est notamment connu de prolonger les « brins retour » de l'armature de carcasse de manière à ce que leur extrémité radialement extérieure se trouve prise en sandwich entre le « brin aller » de l'armature de carcasse et l'armature du sommet. Cette configuration est connue sous le nom de « shoulder lock ».

Si une architecture du type « shoulder lock » permet effectivement de rendre le pneumatique moins vulnérable par rapport au « pinch shock », elle comporte l'inconvénient d'être onéreuse tout en ne permettant pas un ajustement très fin de la performance du pneumatique. A cela s'ajoute que cette solution amplifie les problèmes de non-uniformité liés aux soudures de la nappe formant l'armature de carcasse car une soudure se situe nécessairement au même endroit pour le brin aller et le brin retour.

Un pneumatique comportant une armature de renfort supplémentaire au niveau des flancs est connu du document US-A-3509930.

RESUME DE L'INVENTION

Un des objectifs de la présente invention est de répondre à ces préoccupations et de définir un pneumatique résistant à la fois aux effets néfastes d'une perforation et au phénomène « pinch shock » tout en permettant un ajustement fin de ses performances et une bonne uniformité.

Cet objectif est atteint par un pneumatique pourvu d'une couche de produit auto-obturant et associant une armature de carcasse « sous-dimensionnée », c'est-à-dire dimensionnée de sorte à ce qu'elle ne puisse pas, à elle seule, dans toutes les conditions d'usage raisonnablement prévisibles, remplir toutes les fonctions d'une armature de carcasse (résister à la pression de gonflage, porter la charge, encaisser les chocs), et une armature de renfort supplémentaire appropriée. Les fonctions de l'armature de carcasse sont donc assurées par l'association de l'armature de carcasse proprement dite et par l'armature de renfort supplémentaire, ce qui permet d'optimiser séparément chacune de ces armatures et d'obtenir un rapport performance/prix de revient amélioré.

Plus précisément, l'objectif est atteint par un pneumatique en forme de tore possédant une surface intérieure et une surface extérieure, la surface intérieure étant, au moins en partie recouverte d'une couche étanche, le pneumatique ayant un axe de rotation et comportant :

deux bourrelets destinés à entrer en contact avec une jante de montage, chaque bourrelet comportant au moins une structure annulaire de renforcement ayant un point radialement le plus à l'intérieur,

deux flancs prolongeant les bourrelets radialement vers l'extérieur, les deux flancs s'unissant dans un sommet comportant une armature de sommet, radialement surmontée d'une bande de roulement ;

une armature de carcasse radiale constituée d'éléments de renforcement filaires ayant un allongement à la rupture $AR_C$ et une force à la rupture $FR_C$, posés à un pas de pose $P_C$ et enrobés de composition caoutchouteuse, l'armature de carcasse s'étendant d'un bourrelet à l'autre, en passant par le sommet, l'armature de carcasse étant ancrée dans chaque bourrelet par un retournement autour de ladite au moins une structure annulaire de renforcement, de manière à former un brin aller et un brin retour, l'armature de carcasse étant dimensionnée de manière à satisfaire l'inégalité :

$$\frac{FR_C}{P_C} \leq 1.5 \cdot 10^6 \cdot \frac{\left(R_S^2 - R_E^2\right)}{R_T},$$

où $FR_C$ est exprimé en Newton, $R_S$ est la distance radiale entre l'axe de rotation du pneumatique et le point radialement le plus à l'extérieur de l'armature de carcasse, $R_E$ est la distance radiale entre l'axe de rotation du pneumatique et la position axiale où le pneumatique atteint sa largeur axiale maximale, et $R_T$ est la distance radiale entre l'axe de rotation du pneumatique et le point radialement le plus à l'intérieur de ladite au moins une structure annulaire de renforcement, le pas de pose $P_C$ et les distances radiales $R_S$, $R_E$ et $R_T$ étant exprimées en mètres ;

chaque flanc du pneumatique comportant en outre une armature de renfort supplémentaire constituée d'éléments de renforcement filaires ayant un allongement à la rupture $AR_S$ et une force à la rupture $FR_S$, posés à un pas de pose $P_S$ et enrobés de composition caoutchouteuse, l'armature de renfort supplémentaire s'étendant entre une extrémité radialement intérieure située à proximité de ladite au moins une structure annulaire de renforcement du bourrelet que prolonge le flanc, et une extrémité radialement extérieure située radialement entre l'armature de carcasse et l'armature de sommet,

dans lequel $AR_S$, $FR_S$, $P_S$, $AR_C$, $FR_C$ et $P_C$, sont choisis tels que

$$\frac{FR_S}{P_S} \geq 1.3 \cdot \frac{FR_C}{P_C},$$

et

$$AR_C \geq AR_S,$$

étant précisé que les forces à la rupture et $FR_S$ et $FR_C$, ainsi que les allongements à la rupture $AR_C$ et $AR_S$ sont déterminés sur les éléments de renforcement après extraction du pneumatique cuit,

ladite couche étanche étant, au moins en partie, recouverte d'une couche de produit auto-obturant.

En effet, l'association d'une armature de carcasse « sous-dimensionnée » et d'une armature de renfort supplémentaire permet de réduire le coût et la masse du pneumatique et d'en augmenter la robustesse, tout en donnant au concepteur une flexibilité accrue. Le pneumatique selon l'invention combine cette architecture particulière avec la présence d'une couche de produit auto-obturant, ce qui lui permet de mieux résister aux effets néfastes d'une perforation. Autrement dit, la très grande majorité des crevaisons n'aura aucune conséquence sur la pression interne de gonflage. Dans le cas où cette couche ne permet pas d'éviter la perte de pression du pneumatique, on a constaté que la présence de cette couche permet d'augmenter de façon significative la distance que le pneumatique peut parcourir en roulage à plat tout en conservant la possibilité de conduire le véhicule puisque les bourrelets restent en place sur les sièges de la jante. La présence de cette couche de produit auto-obturant permet en effet de retarder l'endommagement des flancs du pneumatique par effet de lubrification notamment. Ce pneumatique permet ainsi au véhicule, quelle que soit la gravité d'une perforation ou crevaison, de continuer à rouler sur au moins quelques kilomètres ce qui permet de quitter une zone dangereuse. Cela est obtenu sans aucune dégradation du confort, de la résistance au roulement ou du comportement en usage normal.

L'invention permet de renforcer l'armature de carcasse là où elle est fortement sollicitée (c'est-à-dire dans les flancs) tout en réduisant sa résistance (et, par conséquent, son coût) dans la zone où elle n'est que peu sollicitée (c'est-à-dire dans le sommet), contrairement au « shoulder lock » qui se contente de redoubler l'armature de carcasse dans le flanc. L'invention est donc d'autant plus avantageuse que le flanc est court et le sommet large.

Selon un premier mode de réalisation préférentiel, l'armature de sommet a, dans chaque section radiale, deux extrémités axiales et dans lequel l'extrémité radialement extérieure de chacune des deux armatures de renfort supplémentaire est axialement à l'intérieur de l'extrémité axiale de l'armature de sommet la plus proche, la distance axiale entre l'extrémité radialement extérieure de chaque armatures de renfort supplémentaire et de l'extrémité axiale de l'armature de sommet la plus proche étant supérieure ou égale à 10 mm. Ainsi, l'armature est bien ancrée sous l'armature de sommet, ce qui lui permet de bien reprendre les tensions et de soulager l'armature de carcasse proprement dite.

Selon un deuxième mode de réalisation préférentiel, l'extrémité radialement intérieure de chaque armature de renfort supplémentaire est radialement à l'intérieur du point radialement le plus à l'extérieur du brin retour de l'armature de carcasse et la distance radiale DR entre l'extrémité radialement intérieure de chaque armature de renfort supplémentaire et le point radialement le plus à l'extérieur du brin retour de l'armature de carcasse est supérieur ou égal à 10 mm. Cela permet un bon ancrage de l'armature de renfort supplémentaire dans le bourrelet et, par conséquent, une bonne reprise des tensions par l'armature de renfort supplémentaire.

Selon un mode de réalisation particulier, chaque armature de renfort supplémentaire s'étend, dans le bourrelet, le long du brin aller de l'armature de carcasse. Cette configuration a l'avantage d'une grande simplicité de pose lors de la confection du pneu.

Traditionnellement, les pneumatiques sont confectionnés par pose de nappes sur un tambour, en quel cas l'armature de carcasse et l'armature de renfort supplémentaire comportent chacune au moins une soudure par recouvrement. Selon un mode de réalisation particulier, la soudure de l'armature de carcasse est décalée, dans la direction circonférentielle, par rapport à la soudure de l'armature de renfort supplémentaire. Ce mode de réalisation, qui ne peut pas être réalisé dans une architecture de type « shoulder lock », permet d'améliorer l'uniformité du pneumatique.

Selon un mode de réalisation alternatif, chaque armature de renfort supplémentaire s'étend, dans le bourrelet, le long du brin retour de l'armature de carcasse. Ainsi on est certain d'éviter tout contact entre l'armature de renfort supplémentaire et la structure annulaire de renforcement, même lorsque la longueur de l'armature de renfort supplémentaire est trop importante.

Selon un mode de réalisation particulier, les éléments de renforcement de chaque armature de renfort supplémentaire sont orientés radialement. Cette conception permet de conserver le compromis global de performance lié à la structure radiale de l'armature de carcasse (compromis confort, résistance au roulement, comportement...) tout en améliorant la performance en « pinch shock ».

Selon un autre mode de réalisation particulier, les éléments de renforcement de chaque armature de renfort supplémentaire sont inclinés à un angle compris entre 40° et 80°, et de préférence entre 40° et 50°, par rapport à la direction radiale. Cette conception permet d'augmenter la de rigidité verticale, ce qui est bénéfique pour la performance en « pinch shock », tout en orientant aussi les éléments de renforcement de manière à favoriser la reprise de tensions longitudinales, ce qui permet d'améliorer leur résistance aux chocs de trottoir.

Il est notamment possible de réaliser les éléments de renforcement de l'armature de renfort supplémentaire en PET, en aramide, en câbles hybrides aramide/nylon ou encore en câbles hybrides aramide/PET. Des éléments de renforcement en aramide ou en câbles hybrides sont rarement utilisés dans l'armature de carcasse car elles ne résistent pas très bien à la compression. Or l'armature de carcasse est souvent soumis à la compression, surtout dans des pneumatiques ayant des flancs courts. En revanche, l'armature de renfort supplémentaire est moins soumise à la compression, ce qui permet d'utiliser ces éléments de renforcement qui se distinguent par leur ténacité. L'avantage particulier des câbles hybrides aramide/nylon réside dans leur haute résistance à la rupture, celui des câbles hybrides aramide/PET de bénéficier des qualités de l'aramide tout en ayant la rigidité des renforts en PET.

Selon un mode de réalisation particulier, la couche de produit auto-obturant est disposée sur la couche étanche en regard du sommet.

Avantageusement, la couche de produit auto-obturant s'étend sur la couche étanche en regard d'au moins une partie des flancs, de manière à ce que, dans chaque flanc, le point radialement le plus à l'intérieur de la couche de produit auto-obturant se trouve radialement à l'intérieur de l'extrémité radialement extérieure de l'armature de renfort supplémentaire.

La couche de produit auto-obturant peut comporter au moins un élastomère thermoplastique styrénique (dit « TPS ») et plus de 200 pce d'une huile d'extension dudit élastomère, « pce » signifiant parties en poids pour cent parties d'élastomère solide.

Le TPS peut être l'élastomère majoritaire de la couche de produit auto-obturant.

L'élastomère TPS peut être choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Avantageusement, l'élastomère TPS est choisi dans le groupe constitué par les copolymères SEBS, les copolymères SEPS et les mélanges de ces copolymères.

Selon un autre mode de réalisation, la couche de produit auto-obturant peut comporter au moins (pce signifiant parties en poids pour cent parties d'élastomère solide) :

(a) à titre d'élastomère majoritaire, un élastomère diénique insaturé ;
(b) entre 30 et 90 pce d'une résine hydrocarbonée ;
(c) un plastifiant liquide dont la Tg (température de transition vitreuse) est inférieure à -20°C, à un taux pondéral compris entre 0 et 60 pce ; et
(d) de 0 à moins de 120 pce d'une charge.

L'élastomère diénique insaturé est avantageusement choisi dans le groupe constitué par les polybutadiènes, le caoutchouc naturel, les polyisoprènes de synthèse, les copolymères de butadiènes, les copolymères d'isoprène et les mélanges de tels élastomères.

L'élastomère diénique insaturé peut avantageusement être un élastomère isoprénique, de préférence choisi dans le groupe constitué par le caoutchouc naturel, les polyisoprènes de synthèse et les mélanges de tels élastomères.

Avantageusement, le taux d'élastomère diénique insaturé est supérieur à 50 pce, de préférence supérieur à 70 pce.

Bien entendu, il est possible (et peut même être avantageux) d'associer plusieurs de ces modes de réalisation pour obtenir un pneumatique particulièrement performant.

L'invention telle que décrite ci-dessus concerne des pneumatiques ayant un retournement de l'armature de carcasse autour d'une la structure annulaire de renforcement. Bien entendu, il serait possible de prévoir une armature de renfort supplémentaire telle que décrite dans un pneumatique dans lequel l'armature est ancrée entre une pluralité de structures annulaires de renforcement, comme par exemple les architectures obtenues dans le procédé « C3M » de Michelin, bien connues de l'homme du métier.

L'invention a aussi pour objet un ensemble comportant une roue et un pneumatique tel que précédemment décrit, qui comporte en plus un dispositif de mesure de la pression de gonflage de la cavité interne de l'ensemble roue et pneumatique.

Avec un tel ensemble, les cas de perte de pression de gonflage deviennent très rares et de plus dans un tel cas, la perte de pression est le plus souvent très lente. Le dispositif de mesure de la pression de gonflage permet d'alerter suffisamment tôt pour effectuer la réparation du pneumatique ou son changement avant que la pression de gonflage ne devienne très basse et ainsi avant tout endommagement de la structure du pneumatique.

Un tel dispositif peut être un capteur de pression fixé à la valve de la roue ou à la surface interne du pneumatique ou encore placé dans la structure de celui-ci.

BREVE DESCRIPTION DES DESSINS

La figure 1 représente un pneumatique selon l'art antérieur.

La figure 2 représente une vue en perspective partielle d'un pneumatique selon l'art antérieur.

La figure 3 représente, en coupe radiale, une portion d'un pneumatique de référence.

La figure 4 représente, en coupe radiale, une portion d'un pneumatique de référence ayant une configuration dite « shoulder lock ».

Les figures 5 et 7 représentent, en coupe radiale, une portion d'un pneumatique selon l'invention.

La figure 6 illustre la répartition des tensions entre l'armature de carcasse et l'armature de renfort supplémentaire, au niveau du flanc.

La figure 8 illustre certaines grandeurs utilisées pour caractériser un pneumatique selon l'invention.

La figure 9 présente un exemple de dispositif d'extrusion-mélangeage utilisable pour la fabrication d'une composition de produit auto-obturant.

DESCRIPTION DETAILLEE DES FIGURES

Dans l'emploi du terme « radial » il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un fil ou une armature est dit « radial(e) » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet.

Une direction « circonférentielle » est une direction qui est perpendiculaire à la fois à un rayon du pneumatique et à la direction axiale.

Dans le cadre de ce document, l'expression « composition caoutchouteuse » désigne une composition comportant au moins un élastomère et une charge.

**I. Architecture des pneumatiques**

La figure 1 représente schématiquement un pneumatique 10 selon l'art antérieur. Le pneumatique 10 comporte un sommet comprenant une armature de sommet (invisible à la figure 1) surmontée d'une bande de roulement 40, deux flancs 30 prolongeant le sommet radialement vers l'intérieur, ainsi que deux bourrelets 20 radialement intérieurs aux flancs 30.

La figure 2 représente schématiquement une vue en perspective partielle d'un pneumatique 10 selon l'art antérieur et illustre les différentes composantes du pneumatique. Le pneumatique 10 comprend une armature de carcasse 60 constituée de fils 61 enrobés de composition caoutchouteuse, et deux bourrelets 20 comportant chacun d'une structure annulaire de renforcement 70 qui maintient le pneumatique 10 sur la jante (non représentée). L'armature de carcasse 60 est ancrée dans chacun des bourrelets 20 par retournement. Le pneumatique 10 comporte en outre une armature de sommet comprenant deux nappes 80 et 90. Chacune des nappes 80 et 90 est renforcée par des éléments de renforcement 81 et 91 filaires qui sont parallèles dans chaque couche et croisés d'une couche à l'autre, en faisant avec la direction circonférentielle des angles compris entre 10° et 70°. Le pneumatique comporte encore une armature de frettage 100, disposée radialement à l'extérieur de l'armature de sommet, cette armature de frettage étant formée d'éléments de renforcement 101 orientés circonférentiellement et enroulés en spirale. Une bande de roulement 40 est posée sur l'armature de frettage ; c'est cette bande de roulement 40 qui assure le contact du pneumatique 10 avec la route. Le pneumatique 10 représenté est un pneu « tubeless » : il comprend une « gomme intérieure » 50 en composition caoutchouteuse à base de butyle, imperméable au gaz de gonflage, recouvrant la surface intérieure du pneumatique.

La figure 3 représente, en coupe radiale, la moitié d'un pneumatique de référence. Ce pneumatique a un axe de rotation (non représenté) et comporte deux bourrelets 20 destinés à entrer en contact avec une jante de montage (non représentée). Chaque bourrelet comporte une structure annulaire de renforcement, en l'occurrence une tringle 70. Le point radialement le plus à l'intérieur de la tringle porte la référence 71.

Le pneumatique comporte deux flancs 30 prolongeant les bourrelets radialement vers l'extérieur, les deux flancs 30 s'unissant dans un sommet 25 comprenant une armature de sommet formé par les nappes 80 et 90. L'armature de sommet est surmontée d'une bande de roulement 40. En principe, il serait possible de prévoir également une armature de frettage, comme l'armature de frettage 100 du pneumatique représenté à la figure 2, mais en l'occurrence, on a cherché à minimiser le poids du pneumatique en ne prévoyant pas d'armature de frettage.

Le pneumatique comporte une seule armature de carcasse 60 radiale s'étendant depuis les bourrelets 20 à travers les flancs 30 jusqu'au sommet, l'armature de carcasse 60 comportant une pluralité d'éléments de renforcement de carcasse. Elle est ancrée dans les deux bourrelets 20 par un retournement autour de la tringle 70, de manière à former un brin aller 62 et un brin retour 63. Le bourrage 110 formé d'une composition caoutchouteuse remplit le volume entre le brin aller 62 et le brin retour 63.

Le plan médian du pneumatique est indiqué à l'aide de la référence 140.

La figure 4 représente, en coupe radiale, une portion d'un autre pneumatique de référence ayant une configuration dite « shoulder lock ». A la différence du pneumatique représenté à la figure 3, le brin retour 63 ne se termine pas dans le bourrelet mais s'étend jusqu'au sommet. Son extrémité 64 radialement extérieure se situe entre la nappe 80 de l'armature de sommet et le brin aller 62 de l'armature de carcasse. Ainsi, l'armature de carcasse 60 est redoublée dans tout le bourrelet 20 et le flanc 30, ce qui augmente de manière significative la résistance du pneumatique aux agressions de type « pinch shock ».

L'inconvénient de cette architecture est qu'elle est onéreuse - car elle impose d'utiliser la même armature dans les flancs et dans le sommet, alors que l'armature de carcasse pourrait en principe être allégée dans le sommet - tout en ne permettant pas un ajustement très fin de la performance du pneumatique. Le pneumatique selon l'invention dont deux modes de réalisation sont représentées aux figures 5 et 7, permet de surmonter ces inconvénients.

Le pneumatique selon l'invention de la figure 5 comporte deux bourrelets 20 (dont un seul est représenté) destinés à entrer en contact avec une jante de montage (non représentée). Chaque bourrelet comporte une structure annulaire de renforcement, ici une tringle 70 ayant un point 71 radialement le plus à l'intérieur. Il comporte également deux flancs 30 prolongeant les bourrelets 20 radialement vers l'extérieur, les deux flancs s'unissant dans un sommet 25 comportant une armature de sommet, formée par les deux nappes 80 et 90 et radialement surmontée d'une bande de roulement 40. Une armature de carcasse 60 radiale constituée d'éléments de renforcement filaires ayant un allongement à la rupture $AR_C$ et une force à la rupture $FR_C$ et enrobés de composition caoutchouteuse, s'étend d'un bourrelet 20 à l'autre, en passant par le sommet 25. L'armature de carcasse 60 est ancrée dans chaque bourrelet 20 par un retournement autour de la tringle 70, de manière à former un brin aller 62 et un brin retour 63. Elle est dimensionnée de manière à satisfaire l'inégalité :

$$\frac{FR_C}{P_C} \leq 1.5 \cdot 10^6 \cdot \frac{\left(R_S^2 - R_E^2\right)}{R_T}.$$

$P_C$ est le pas de pose des éléments de renforcement de l'armature de carcasse (c'est-à-dire 1 divisé par le nombre d'éléments de renforcement par mètre et donc exprimé en mètres) dans le voisinage de la tringle 70 ; la force à la rupture $FR_C$ est exprimée en Newton.

La signification des paramètres $R_S$, $R_E$ et $R_T$ est illustrée à la figure 8. $R_S$ est la distance radiale entre l'axe de rotation 2 du pneumatique 10 et le point 360 radialement le plus à l'extérieur de l'armature de carcasse 60, $R_E$ est la distance radiale entre l'axe de rotation 2 et la position axiale où le pneumatique atteint sa largeur axiale maximale SW, et $R_T$ est la distance radiale entre l'axe de rotation 2 et le point 71 radialement le plus à l'intérieur de la tringle 70 (indiqué à la figure 5). Les distances radiales $R_S$, $R_E$ et $R_T$ sont exprimées en mètres.

Comme le suggère la figure 5, chaque flanc 30 du pneumatique 10 selon l'invention comporte une armature de renfort supplémentaire 120 constituée d'éléments de renforcement filaires ayant un allongement à la rupture $AR_S$ et une force à la rupture $FR_S$, posés à un pas de pose $P_S$ et enrobés de composition caoutchouteuse, l'armature de renfort supplémentaire s'étendant entre une extrémité 121 radialement intérieure située à proximité de la tringle 70 et une extrémité 122 radialement extérieure située radialement entre l'armature de carcasse et l'armature de sommet. $FR_S$, $P_S$, $FR_C$ et $P_C$, sont choisis tels que

$$\frac{FR_S}{P_S} \geq 1.3 \cdot \frac{FR_C}{P_C}.$$

Cette différence des forces de rupture peut être obtenue par divers moyens connus en soi de la personne du métier. Il est possible de varier notamment le titre, la torsion, le matériau ou encore le traitement thermique subi par les éléments de renforcement afin d'obtenir la différence requise.

L'allongement à la rupture $AR_C$ des éléments de renforcement de l'armature de carcasse est supérieur ou égal à l'allongement à la rupture $AR_S$ des éléments de renforcement de chacune des armatures de renfort supplémentaires ($AR_C \geq AR_S$).

Les forces à la rupture et $FR_S$ et $FR_C$, ainsi que les allongements à la rupture $AR_C$ et $AR_S$ sont déterminés sur les éléments de renforcement après extraction du pneumatique cuit.

Pour ce faire, la gomme intérieure 50 du pneumatique (voir figure 5) est retirée et les éléments de renforcement sont arrachés du pneumatique, en prenant soin de ne pas les endommager. On évitera l'utilisation de solvants, ce qui veut dire que les éléments de renforcement restent partiellement enrobés de composition caoutchouteuse. Lorsque les éléments de renforcement sont en rayonne, ils sont séchés pendant 120 ± 15 min. à une température de 105 ± 4.5°C. Ensuite, les éléments de renforcement sont conditionnées à 23 ± 2°C, à une hygrométrie de 27± 10%, pendant une durée qui dépend de la nature des éléments :

- rayonne : au moins 5 jours et au plus 15 jours ;
- nylon et hybrides à base de nylon : au moins 3 jours ;
- autres (notamment PET et aramides) : au moins 1 jour.

Ensuite, on procède à la mesure de la force à la rupture et de l'allongement à la rupture, effectuée de manière bien connue de la personne du métier à l'aide d'une machine de traction « INSTRON » (voir aussi la norme ASTM D 885-06). Les échantillons testés subissent une traction sur une longueur initiale L0 (en mm) à une vitesse nominale de L0 mm/min, sous une pré-tension standard de 1 cN/tex (moyenne sur au moins 10 mesures). La force à la rupture retenue est la force maximale mesurée.

Précisons que les valeurs mesurées après extraction sont, le plus souvent, assez proches des valeurs qui sont obtenues sur les éléments de renforcement avant leur incorporation dans le pneumatique, de sorte que le choix d'éléments de renforcement appropriés permettant d'obtenir certaines valeurs après extraction du pneumatique ne pose aucun problème à la personne du métier.

L'armature de sommet a, dans chaque section radiale, deux extrémités axiales 180 (dont une seule est représentée). L'extrémité 122 radialement extérieure de chacune des deux armatures de renfort supplémentaire 120 est axialement à l'intérieur de l'extrémité axiale de l'armature de sommet la plus proche, la distance axiale DA entre l'extrémité 122 radialement extérieure de chaque armatures de renfort supplémentaire et l'extrémité axiale 180 de l'armature de sommet la plus proche étant en l'occurrence égale à 10 mm.

L'extrémité 121 radialement intérieure de l'armature de renfort supplémentaire 120 est radialement à l'intérieur du point 64 radialement le plus à l'extérieur du brin retour 63 de l'armature de carcasse 60 et la distance radiale DR entre l'extrémité 121 radialement intérieure de l'armature de renfort supplémentaire 120 et le point 71 radialement le plus à l'extérieur du brin retour 63 de l'armature de carcasse 60 est en l'occurrence égale à 16 mm.

Dans le pneumatique selon l'invention représenté à la figure 5, chaque armature de renfort supplémentaire 120 s'étend, dans le bourrelet 20, le long du brin aller 62 de l'armature de carcasse 60. Il ne s'agit pas là d'une caractéristique essentielle de l'invention, il est parfaitement possible de prévoir que chaque armature de renfort supplémentaire 120 s'étend, dans le bourrelet 20, le long du brin retour 63 de l'armature de carcasse, comme cela est représenté à la figure 7.

Dans les pneumatiques représentés aux figures 5 et 7, les éléments de renforcement de chaque armature de renfort supplémentaire 120 sont orientés radialement, mais il est également possible d'utiliser des armatures de renfort supplémentaire 120 dont les éléments de renforcement sont inclinés à un angle compris entre 40° et 80° et de préférence entre 40° et 50°, par rapport à la direction radiale.

Les éléments de renforcement de l'armature de renfort supplémentaire 120 des pneumatiques représentés aux figures 5 et 7 sont réalisés en PET, mais d'autres choix sont possibles, comme par exemple des câbles en aramide, des câbles hybrides aramide/nylon ou encore des câbles hybrides aramide/PET.

Les pneumatiques représentés aux figures 5 et 7 comportent une couche 55 de produit auto-obturant disposée sur une partie de la gomme intérieure 50. Dans les deux cas d'espèce, la couche 55 de produit auto-obturant est placée en regard du sommet 25 du pneumatique et s'étend axialement sur une partie des flancs 30, de manière à ce que, dans chaque flanc, le point 56 radialement le plus à l'intérieur de la couche 55 de produit auto-obturant se trouve radialement à l'intérieur de l'extrémité 122 radialement extérieure de l'armature de renfort supplémentaire 120, mais il est parfaitement possible de couvrir toute la gomme intérieure de produit auto-obturant. Cette couche 55 de produit auto-obturant permet de traiter la plus grande partie des crevaisons en obturant celles-ci. Les caractéristiques de cette couche sont décrites dans ce qui suit.

**II. Couche de produit auto-obturant**

Dans la description de la couche de produit auto-obturant, sauf indication expresse différente, tous les pourcentages (%) indiqués sont des % en masse.

D'autre part, tout intervalle de valeurs désigné

par l'expression « entre a et b » représente le domaine de valeurs supérieur à « a » et inférieur à « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

L'abréviation « pce » (en anglais « phr ») signifie parties en poids pour cent parties d'élastomère à l'état solide (du total des élastomères solides si plusieurs élastomères solides sont présents).

Par l'expression composition « à base de », il faut entendre de manière générale une composition comportant le mélange et/ou le produit de réaction de ses différents composants, certains de ces composants pouvant être susceptibles de (voire destinés à) réagir entre eux, au moins en partie, lors des différentes phases de fabrication de la composition, par exemple au cours de son éventuelle réticulation ou vulcanisation (cuisson) finale.

Couche de produit auto-obturant à base d'un élastomère thermoplastiques styrénique

Selon un mode de réalisation, la couche 55 de produit auto-obturant comporte un élastomère thermoplastique styrénique (dit « TPS ») et plus de 200 pce d'une huile d'extension de l'élastomère. Les élastomères thermoplastiques styréniques sont des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés.

L'élastomère TPS est choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Plus préférentiellement, l'élastomère est choisi dans le groupe constitué par les copolymères SEBS, les copolymères SEPS et les mélanges de ces copolymères.

L'élastomère TPS peut constituer la totalité de la matrice élastomère ou la majorité pondérale (de préférence pour plus de 50 %, plus préférentiellement pour plus de 70%) de cette dernière lorsqu'elle comporte un ou plusieurs autre(s) élastomère(s), thermoplastiques ou non, par exemple du type diéniques.

Des exemples de telles couches auto-obturantes et de leurs propriétés sont divulgués dans les documents FR 2 910 382, FR 2 910 478 et FR 2 925 388.

Une telle couche de produit auto-obturant peut être préformée par extrusion d'un profilé plat aux dimensions appropriées pour son application sur un tambour de fabrication. Un exemple de réalisation est présenté dans le document FR 2 925 388.

Couche de produit auto-obturant à base d'élastomère diénique

Selon un autre exemple de réalisation, la couche 55 de produit auto-obturant est constituée d'une composition élastomère comportant au moins, à titre d'élastomère majoritaire (préférentiellement pour plus de 50 pce), un élastomère diénique insaturé, entre 30 et 90 pce d'une résine hydrocarbonée et un plastifiant liquide de température de transition vitreuse ou Tg inférieure à -20°C, à un taux compris entre 0 et 60 pce (pce signifiant parties en poids pour cent parties d'élastomère solide). Elle a pour autre caractéristique essentielle d'être dépourvue de charge ou d'en comporter moins de 120 pce.

*Élastomère diénique*

Par élastomère ou caoutchouc « diénique », on rappelle que doit être compris, de manière connue, un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories, saturés ou insaturés. On entend dans la présente demande par élastomère diénique « insaturé » (ou « essentiellement insaturé ») un élastomère diénique issu au moins en partie de monomères diènes conjugués et ayant un taux de motifs ou unités issus de diènes conjugués qui est supérieur à 30% (% en moles) ; c'est ainsi que sont exclus de cette définition des élastomères diéniques tels que les caoutchoucs butyl ou les copolymères de diènes et d'alpha-oléfines type EPDM qui peuvent être qualifiés d'élastomères diéniques « saturés » ou « essentiellement saturés » en raison de leur taux réduit de motifs d'origine diénique (toujours inférieur à 15% en moles).

On utilise préférentiellement un élastomère diénique insaturé dont le taux (% en moles) de motifs d'origine diénique (diènes conjugués) est supérieur à 50%, un tel élastomère diénique étant plus préférentiellement choisi dans le groupe constitué par les polybutadiènes (BR), le caoutchouc naturel (NR), les polyisoprènes de synthèse (IR), les copolymères de butadiènes (par exemple de butadiène-styrène ou SBR), les copolymères d'isoprène (bien entendu, autres que caoutchouc butyl) et les mélanges de tels élastomères.

Par opposition à des élastomères diéniques du type liquide, l'élastomère diénique insaturé de la composition est par définition solide. De préférence, sa masse moléculaire moyenne en nombre (Mn) est comprise entre 100 000 et 5 000 000, plus préférentiellement entre 200

000 et 4 000 000 g/mol. La valeur Mn est déterminée de manière connue, par exemple par SEC : solvant tétrahydrofurane ; température 35°C; concentration 1 g/l ; débit 1 ml/min ; solution filtrée sur filtre de porosité 0,45 μm avant injection ; étalonnage de Moore avec des étalons (polyisoprène) ; jeu de 4 colonnes « WATERS » en série (« STYRAGEL » HMW7, HMW6E, et 2 HT6E) ; détection par réfractomètre différentiel (« WATERS 2410») et son logiciel d'exploitation associé (« WATERS EMPOWER »).

Plus préférentiellement, l'élastomère diénique insaturé de la composition de la couche de produit auto-obturant est un élastomère isoprénique. Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les copolymères de butadiène-isoprène (BIR), les copolymères de styrène-isoprène (SIR), les copolymères de styrène-butadiène-isoprène (SBIR) et les mélanges de ces élastomères.

Cet élastomère isoprénique est de préférence du caoutchouc naturel ou un polyisoprène cis-1,4 de synthèse; parmi ces polyisoprènes de synthèse, sont utilisés préférentiellement des polyisoprènes ayant un taux (% molaire) de liaisons cis-1,4 supérieur à 90%, plus préférentiellement encore supérieur à 95%, notamment supérieur à 98%.

L'élastomère diénique insaturé ci-dessus, notamment élastomère isoprénique tel que caoutchouc naturel, peut constituer la totalité de la matrice élastomère ou la majorité pondérale (de préférence pour plus de 50%, plus préférentiellement pour plus de 70%) de cette dernière lorsqu'elle comporte un ou plusieurs autre(s) élastomère(s), diéniques ou non diéniques, par exemple du type thermoplastiques. En d'autres termes et de préférence, dans la composition, le taux d'élastomère diénique insaturé (solide), notamment d'élastomère isoprénique tel que caoutchouc naturel, est supérieur à 50 pce, plus préférentiellement supérieur à 70 pce. Plus préférentiellement encore, ce taux d'élastomère diénique insaturé, notamment d'élastomère isoprénique tel que caoutchouc naturel, est supérieur à 80 pce.

Selon un mode de réalisation particulier, la couche de produit auto-obturant comporte, préférentiellement à titre d'élastomère majoritaire, un coupage (ou « mélange ») d'au moins deux élastomères solides :

- au moins un (c'est-à-dire un ou plusieurs) polybutadiène ou copolymère de butadiène, dit "élastomère A", et
- au moins un (c'est-à-dire un ou plusieurs) caoutchouc naturel ou polyisoprène de synthèse, dit "élastomère B".

Comme polybutadiènes, on peut citer notamment ceux ayant une teneur en unités -1,2 comprise entre 4% et 80% ou ceux ayant une teneur en cis-1,4 supérieure à 80%. Comme copolymères de butadiène, on peut citer notamment les copolymères de butadiène-styrène (SBR), les copolymères de butadiène-isoprène (BIR), les copolymères de styrène-butadiène-isoprène (SBIR). Conviennent notamment les copolymères SBR ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères BIR ayant une teneur en isoprène comprise entre 5% et 90% en poids et une Tg de -40°C à -80°C, les copolymères SBIR ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère SBIR ayant une Tg comprise entre -20°C et -70°C.

Plus préférentiellement encore, l'élastomère A est un homopolymère de butadiène, en d'autres termes un polybutadiène (BR), ce polybutadiène ayant préférentiellement un taux (% molaire) de liaison cis-1,4 supérieur à 90%, plus préférentiellement supérieur à 95%.

L'élastomère B est du caoutchouc naturel ou un polyisoprène de synthèse ; parmi les polyisoprènes de synthèse, sont utilisés préférentiellement des polyisoprènes cis-1,4, préférentiellement ceux ayant un taux (% molaire) de liaisons cis-1,4 supérieur à 90%, plus préférentiellement encore supérieur à 95%, notamment supérieur à 98%.

Les élastomères A et B ci-dessus peuvent être par exemple à blocs, statistiques, séquencés, microséquencés, et être préparés en dispersion ou en solution ; ils peuvent être couplés et/ou étoilés et/ou branchés ou encore fonctionnalisés, par exemple avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères

(tels que SBR, BR, NR ou IR) du type époxydés.

Selon un mode de réalisation préférentiel, le rapport pondéral élastomère A : élastomère B est préférentiellement compris dans un domaine de 20:80 à 80:20, plus préférentiellement encore compris dans un domaine de 30:70 à 70:30, en particulier de 40:60 à 60:40.

C'est dans de tels domaines de concentrations respectives des deux élastomères A et B que l'on a observé, selon les différentes utilisations particulières visées, les meilleurs compromis en termes de propriétés auto-obturantes et de température d'utilisation, en particulier lors d'une utilisation à basse température (notamment inférieure à 0°C), comparativement à l'utilisation de caoutchouc naturel seul ou de polybutadiène seul.

Les élastomères A et B sont par définition solides. Par opposition à liquide, on entend par solide toute substance n'ayant pas la capacité de prendre à terme, au plus tard au bout de 24 heures, sous le seul effet de la gravité et à température ambiante (23°C), la forme du récipient qui la contient.

Par opposition à des élastomères du type liquides utilisables éventuellement comme plastifiants liquides dans la composition de l'invention, les élastomères A et B et leur coupage se caractérisent par une viscosité très élevée : leur viscosité Mooney à l'état cru (i.e., non réticulé) ML (1+4), mesurée à 100°C, est de préférence supérieure à 20, plus préférentiellement supérieure à 30, en particulier comprise entre 30 et 130.

Pour rappel, la viscosité ou plasticité Mooney caractérise de manière connue des substances solides. On utilise un consistomètre oscillant tel que décrit dans la norme ASTM D1646 (1999). La mesure de plasticité Mooney se fait selon le principe suivant : l'échantillon analysé à l'état cru (i.e., avant cuisson) est moulé (mis en forme) dans une enceinte cylindrique chauffée à une température donnée (par exemple 35°C ou 100°C). Après une minute de préchauffage, le rotor tourne au sein de l'éprouvette à 2 tours/minute et on mesure le couple utile pour entretenir ce mouvement après 4 minutes de rotation. La viscosité Mooney (ML 1+4) est exprimée en "unité Mooney" (UM, avec 1 UM=0,83 Newton-mètre).

Selon une autre définition possible, on entend également par élastomère solide un élastomère à haute masse molaire, c'est-à-dire présentant typiquement une masse molaire moyenne en nombre (Mn) qui est supérieure à 100 000 g/mol ; de préférence, dans un tel élastomère solide, au moins 80%, plus préférentiellement au moins 90% de l'aire de la distribution des masses molaires (mesurée par SEC) est située au-delà de 100 000 g/mol.

De préférence, la masse molaire moyenne en nombre (Mn) de chacun des élastomères A et B est comprise entre 100 000 et 5 000 000 g/mol, plus préférentiellement entre 150 000 et 4 000 000 g/mol ; en particulier elle est comprise entre 200 000 et 3 000 000 g/mol, plus particulièrement entre 200 000 et 1 500 000 g/mol. Préférentiellement, leur indice de polymolécularité Ip (Mw/Mn) est compris entre 1,0 et 10,0, en particulier compris entre 1,0 et 3,0 en ce qui concerne l'élastomère A, entre 3,0 et 8,0 en ce qui concerne l'élastomère B.

L'homme du métier saura ajuster, à la lumière de la présente description et en fonction de l'application particulière visée pour la composition de l'invention, la masse molaire moyenne et/ou la distribution des masses molaires des élastomères A et B. Selon un mode de réalisation particulier de l'invention, il pourra par exemple opter pour une large distribution de masses molaires. S'il souhaite privilégier la fluidité de la composition auto-obturante, il pourra favoriser plutôt la proportion de basses masses molaires. Selon un autre mode de réalisation particulier, combinable ou non au précédent, il pourra aussi privilégier la proportion de masses molaires intermédiaires en vue d'optimiser plutôt la fonction d'auto-obturation (remplissage) de la composition. Selon un autre mode de réalisation particulier, il pourra privilégier plutôt la proportion de hautes masses molaires en vue d'augmenter la tenue mécanique de la composition auto-obturante.

L'obtention de ces différentes distributions de masses molaires pourra se faire par exemple par mélangeage d'élastomères diéniques (élastomères A et/ou élastomères B) de départ différents.

Selon un mode de réalisation préférentiel de la couche de produit auto-obturant, le coupage d'élastomères solides A et B ci-dessus constitue le seul élastomère solide présent dans la composition auto-obturante de l'invention, c'est-à-dire que le taux global des deux élastomères A et B est alors de 100 pce ; en d'autres termes, les taux d'élastomère A et d'élastomère B sont par conséquent chacun compris dans un domaine de 10 à 90 pce, de préférence de 20 à 80 pce, plus préférentiellement de 30 à 70 pce, en particulier de 40 à 60 pce.

Selon un autre mode de réalisation particulier de la couche de produit auto-obturant, lorsque le coupage d'élastomères A et B ne constitue pas le seul élastomère solide de la composition de l'invention, ledit coupage constitue préférentiellement l'élastomère solide majoritaire en poids dans la composition de l'invention ; plus préférentiellement, le taux global des deux élastomères A et B est alors supérieur à 50 pce, plus préférentiellement supérieur à 70 pce, en particulier supérieur à 80 pce.

Ainsi, selon des modes de réalisation particuliers de l'invention, le coupage d'élastomères A et B pourrait être associé à d'autres élastomères (solides) minoritaires en poids, qu'il s'agisse d'élastomères diéniques insaturés ou saturés (par exemple butyl), ou encore d'élastomères autres que diéniques, par exemple des élastomères thermoplastiques styréniques (dits "TPS"), par exemple choisis dans le groupe constitué par les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/ styrène (SEPS), styrène/

éthylène/ éthylène/ propylène/ styrène (SEEPS) et les mélanges de ces copolymères.

De manière surprenante, le coupage d'élastomères A et B ci-dessus, non chargé (ou très faiblement chargé), s'est révélé capable, après ajout d'une résine hydrocarbonée thermoplastique dans le domaine étroit préconisé, de remplir la fonction d'une composition auto-obturante performante.

*Résine hydrocarbonée*

Le deuxième constituant essentiel de la composition auto-obturante selon ce second mode de réalisation est une résine hydrocarbonée.

La dénomination « résine » est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur température de transition vitreuse (Tg) est préférentiellement supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*), température à laquelle le produit, par exemple sous forme de poudre, s'agglutine ; cette donnée tend à remplacer le point de fusion, assez mal défini, des résines en général. La température de ramollissement d'une résine hydrocarbonée est généralement supérieure d'environ 50 à 60°C à la valeur de Tg.

Dans la composition de la couche de produit auto-obturant, la température de ramollissement de la résine est préférentiellement supérieure à 40°C (en particulier comprise entre 40°C et 140°C), plus préférentiellement supérieure à 50°C (en particulier comprise entre 50°C et 135°C).

Ladite résine est utilisée à un taux pondéral compris entre 30 et 90 pce. En dessous de 30 pce, la performance anti-crevaison s'est avérée insuffisante en raison d'une rigidité trop importante de la composition, alors qu'au-delà de 90 pce, on s'expose à une tenue mécanique insuffisante du matériau avec en outre un risque de performance dégradée à haute température (typiquement supérieure à 60°C). Pour ces raisons, le taux de résine est préférentiellement compris entre 40 et 80 pce, plus préférentiellement encore au moins égal à 45 pce, notamment compris dans un domaine de 45 à 75 pce.

Selon un mode de réalisation préférentiel de la couche de produit auto-obturant, la résine hydrocarbonée présente au moins une (quelconque), plus préférentiellement l'ensemble des caractéristiques suivantes :

- une Tg supérieure à 25°C ;
- un point de ramollissement supérieur à 50°C (en particulier compris entre 50°C et 135°C) ;
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine hydrocarbonée présente au moins une (quelconque), plus préférentiellement l'ensemble des caractéristiques suivantes :

- une Tg comprise entre 25°C et 100°C (notamment entre 30°C et 90°C) ;
- un point de ramollissement supérieur à 60°C, en particulier compris entre 60°C et 135°C ;
- une masse moyenne Mn comprise entre 500 et 1500 g/mol ;
- un indice de polymolécularité Ip inférieur à 2.

La Tg est mesurée selon la norme ASTM D3418 (1999). Le point de ramollissement est mesuré selon la norme ISO 4625 (méthode "Ring and Ball"). La macrostructure (Mw, Mn et Ip) est déterminée par chromatographie d'exclusion stérique (SEC): solvant tétrahydrofurane ; température 35°C ; concentration 1 g/l ; débit 1 ml/min ; solution filtrée sur filtre de porosité 0,45 $\mu$m avant injection ; étalonnage de Moore avec des étalons de polystyrène ; jeu de 3 colonnes « WATERS » en série (« STYRAGEL » HR4E, HR1 et HR0.5) ; détection par réfractomètre différentiel (« WATERS 2410 ») et son logiciel d'exploitation associé (« WATERS EMPOWER »).

A titres d'exemples de telles résines hydrocarbonées, on peut citer celles choisies dans le groupe constitué par les résines d'homopolymère ou copolymère de

cyclopentadiène (en abrégé CPD) ou dicyclopentadiène (en abrégé DCPD), les résines d'homopolymère ou copolymère terpène, les résines d'homopolymère ou copolymère de coupe C5 et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme « terpène » regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe $C_9$ (ou plus généralement d'une coupe $C_8$ à $C_{10}$).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination « Dercolyte » pour ce qui concerne les résines polylimonène, par la société Neville Chemical Company sous dénomination « Super Nevtac » ou par Kolon sous dénomination « Hikorez » pour ce qui concerne les résines coupe $C_5$/ styrène ou résines coupe $C_5$/ coupe $C_9$, ou encore par la société Struktol sous dénomination « 40 MS » ou « 40 NS » ou par la société Exxon Mobil sous dénomination « Escorez » (mélanges de résines aromatiques et/ou aliphatiques).

*Charge*

La composition de couche de produit auto-obturant selon ce second mode de réalisation a pour autre caractéristique essentielle de comporter de 0 à moins de 120 pce d'au moins une (c'est-à-dire une ou plusieurs) charge, dont 0 à moins de 30 pce d'au moins une (c'est-à-dire une ou plusieurs) charge renforçante.

Par charge, on entend ici tout type de charge, qu'elle soit renforçante (typiquement à particules nanométriques, et préférentiellement de taille moyenne en poids inférieure à 500 nm, notamment entre 20 et 200 nm) ou qu'elle soit non-renforçante ou inerte (typiquement à particules micrométriques, et préférentiellement de taille moyenne en poids supérieure à 1 $\mu$m, par exemple entre 2 et 200 $\mu$m). La taille moyenne en poids étant mesurée de manière bien connue de l'homme du métier (à titre d'exemple, selon la demande WO 2009/083160 paragraphe I.1).

A titre d'exemples de charges connues comme renforçantes par l'homme du métier, on citera notamment du noir de carbone ou une charge inorganique renforçante telle que la silice en présence d'un agent de couplage, ou un coupage de ces deux types de charge. En effet, de manière connue, la silice est une charge renforçante en présence d'un agent de couplage lui permettant de se lier à l'élastomère.

Comme noirs de carbone, par exemple, conviennent tous les noirs de carbone, notamment les noirs conventionnellement utilisés dans les bandages pneumatiques. Parmi ces derniers, on citera par exemple les noirs de carbone de grade (ASTM) 300, 600, 700 ou 900 (par exemple N326, N330, N347, N375, N683, N772, N990). Comme charges inorganiques renforçantes conviennent notamment des charges minérales hautement dispersibles du type silice ($SiO_2$), notamment les silices précipitées ou pyrogénées présentant une surface BET inférieure à 450 $m^2$/g, de préférence de 30 à 400 $m^2$/g.

A titre d'exemples de charges autres que renforçantes, ou charges inertes connues par l'homme du métier, on citera notamment celles choisies dans le groupe constitué par les cendres (i.e., résidus de combustion), les microparticules de carbonates de calcium naturels (craie) ou synthétiques, les silicates synthétiques ou naturels (tels que kaolin, talc, mica, cloisite), les silices (en l'absence d'agent de couplage), les oxydes de titane, les alumines, les aluminosilicates (argile, bentonite), et leurs mélanges. Des charges colorantes ou colorées par exemple par des pigments pourront être avantageusement utilisées pour colorer la composition selon la couleur désirée. Préférentiellement, la composition de l'invention comporte une charge autre que renforçante choisie parmi le groupe constitué par la craie, le talc, le kaolin et leurs mélanges.

L'état physique sous lequel se présente la charge est indifférent, que ce soit sous forme de poudre, de microperles, de granulés, de billes ou toute autre forme densifiée appropriée. Bien entendu, on entend également par charge des mélanges de différentes charges, renforçantes et/ou non renforçantes.

Ces charges, renforçantes ou autres, sont habituellement là pour donner de la stabilité dimensionnelle, c'est-à-dire une tenue mécanique minimale à la composition finale. On en met de préférence d'autant moins dans la composition que la charge est connue comme renforçante vis-à-vis d'un élastomère, notamment d'un élastomère diénique tel que du caoutchouc naturel ou

du polybutadiène.

L'homme de l'art saura, à la lumière de la présente description, ajuster le taux de charge de la composition de l'invention afin d'atteindre les niveaux de propriétés souhaités et adapter la formulation à l'application spécifique envisagée. Préférentiellement, la composition de l'invention comporte de 0 à moins de 100 pce de charge, de préférence de 0 à moins de 70 pce de charge, dont 0 à moins de 15 pce de charge renforçante, de préférence 0 à moins de 10 pce de charge renforçante.

Plus préférentiellement encore, la composition de l'invention comporte de 0 à 70 pce de charge dont 0 à moins de 5 pce de charge renforçante. De manière très préférentielle, la composition de l'invention comporte une charge autre que renforçante, à un taux pouvant aller de 5 à 70 pce, de préférence de 10 à 30 pce.

Selon l'application envisagée, l'invention peut notamment se décliner en deux modes de réalisation, selon le taux de charge. En effet, une quantité de charge trop élevée, pénalise les propriétés requises de souplesse, de déformabilité et d'aptitude au fluage, tandis que la présence d'une certaine quantité de charge (par exemple de 30 à moins de 120 pce), permet d'améliorer la processabilité, et de diminuer le coût.

Ainsi, selon un premier mode particulier de réalisation, la composition est très faiblement chargée, c'est-à-dire qu'elle comporte de 0 à moins de 30 pce de charge au total (dont 0 à moins de 30 pce de charge renforçante), préférentiellement 0 à moins de 30 pce de charge, dont 0 à moins de 15 pce de charge renforçante (plus préférentiellement 0 à moins de 10 pce de charge renforçante). Selon ce premier mode de réalisation, cette composition a pour avantage de permettre une composition auto-obturante ayant de bonnes propriétés anti-crevaison à froid et à chaud.

De manière plus préférentielle selon ce premier mode particulier de réalisation, si une charge renforçante est présente dans la composition de l'invention, son taux est préférentiellement inférieur à 5 pce (soit entre 0 et 5 pce), en particulier inférieur à 2 pce (soit entre 0 et 2 pce). De tels taux se sont avérés particulièrement favorables au procédé de fabrication de la composition de l'invention, tout en offrant à cette dernière d'excellentes performances auto-obturantes. On utilise plus préférentiellement un taux compris entre 0,5 et 2 pce, en particulier lorsqu'il s'agit de noir de carbone.

Préférentiellement également selon ce premier mode particulier de réalisation, si une charge autre que renforçante est utilisée, son taux est de préférence de 5 à moins de 30 pce, en particulier de 10 à moins de 30 pce.

Par ailleurs, selon un second mode particulier de réalisation, préférentiel, la composition comporte de 30 à moins de 120 pce de charge, préférentiellement de plus de 30 à moins de 100 pce, et plus préférentiellement de 35 à 80 pce, dont, selon ce second mode de réalisation, 0 à moins de 30 pce de charge renforçante (plus préférentiellement de 0 à moins de 15 pce). Selon ce second mode particulier de réalisation, cette composition a pour avantage d'améliorer la processabilité, et de diminuer le coût tout en n'étant pas trop pénalisée quant à ses propriétés de souplesse, de déformabilité et d'aptitude au fluage. Par ailleurs, ce second mode de réalisation confère à la composition une performance anti-crevaison nettement améliorée.

De manière préférentielle selon ce second mode particulier de réalisation, si une charge renforçante est présente dans la composition de l'invention, son taux est préférentiellement inférieur à 5 pce (soit entre 0 et 5 pce), en particulier inférieur à 2 pce (soit entre 0 et 2 pce). De tels taux se sont avérés particulièrement favorables au procédé de fabrication de la composition de l'invention, tout en offrant à cette dernière d'excellentes performances auto-obturantes. On utilise plus préférentiellement un taux compris entre 0,5 et 2 pce, en particulier lorsqu'il s'agit de noir de carbone.

Préférentiellement selon ce second mode particulier de réalisation, le taux de charge autre que renforçante est de 5 à moins de 120 pce, en particulier de 10 à moins de 100 pce et plus préférentiellement de 15 à 80 pce. De manière très préférentielle, le taux de charge autre que renforçante est compris dans un domaine allant de 25 à 50 pce, plus préférentiellement encore de 30 à 50 pce.

*Plastifiant liquide*

La composition de la couche de produit auto-obturante selon le second mode de réalisation peut comporter en outre, à un taux inférieur à 60 pce (en d'autres termes entre 0 et 60 pce), un agent plastifiant liquide (à 23°C) dit « à basse Tg » dont la fonction est notamment de ramollir la matrice en diluant l'élastomère diénique et la résine hydrocarbonée, améliorant en particulier les performances d'auto-obturation « à froid » (c'est-à-dire typiquement pour une température inférieure à 0°C) ; sa Tg est par définition inférieure à -20°C, elle est de préférence inférieure à -40°C.

Tout élastomère liquide, toute huile d'extension, qu'elle soit de nature aromatique ou non-aromatique, plus généralement tout agent plastifiant liquide connu pour ses propriétés plastifiantes vis-à-vis d'élastomères, notamment diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment à des résines hydrocarbonées qui sont par nature solides à température ambiante.

Conviennent notamment des élastomères liquides à faible masse moléculaire moyenne en nombre (Mn), typiquement comprise entre 300 et 90 000, plus généralement entre 400 et 50 000, par exemple sous la forme de caoutchouc naturel dépolymérisé, de BR, SBR ou IR liquides, tels que décrits par exemple dans les documents brevet US 4 913 209, US 5 085 942 et US 5 295 525 précités. Peuvent être également utilisés des

mélanges de tels élastomères liquides avec des huiles telles que décrites ci-après.

Conviennent également des huiles d'extension, notamment celles choisies dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité, hydrogénées ou non), les huiles aromatiques ou DAE (*Distillate Aromatic Extracts*), les huiles MES (*Medium Extracted Solvates*), les huiles TDAE (*Treated Distillate Aromatic Extracts*), les huiles minérales, les huiles végétales (et leurs oligomères, e.g. huiles de colza, soja, tournesol) et les mélanges de ces huiles.

Selon un mode de réalisation particulier, on utilise par exemple une huile du type polybutène, en particulier une huile polyisobutylène (en abrégé « PIB »), qui a démontré un excellent compromis de propriétés comparativement aux autres huiles testées, notamment à une huile conventionnelle du type paraffinique. A titre d'exemples, des huiles PIB sont commercialisées notamment par la société UNIVAR sous la dénomination « Dynapak Poly » (e.g. « Dynapak Poly 190 »), par BASF sous les dénominations « Glissopal » (e.g. « Glissopal 1000 ») ou « Oppanol » (e.g. « Oppanol B12 ») ; des huiles paraffiniques sont commercialisées par exemple par EXXON sous la dénomination « Telura 618 » ou par Repsol sous la dénomination « Extensol 51 ».

Conviennent également, à titre de plastifiants liquides, des plastifiants éthers, esters, phosphates, sulfonates, plus particulièrement ceux choisis parmi esters et phosphates. A titre de plastifiants phosphates préférentiels, on peut citer ceux qui contiennent entre 12 et 30 atomes de carbone, par exemple le trioctyle phosphate. A titre de plastifiants esters préférentiels, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer comme triesters de glycérol préférentiels ceux qui sont constitués majoritairement (pour plus de 50 %, plus préférentiellement pour plus de 80 % en poids) d'un acide gras insaturé en $C_{18}$, c'est-à-dire d'un acide gras choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238 (ou US 2004/0127617), à titre d'agents plastifiants dans des bandes de roulement pour pneumatiques.

La masse moléculaire moyenne en nombre (Mn) du plastifiant liquide est préférentiellement comprise entre 400 et 25 000 g/mol, plus préférentiellement encore comprise entre 800 et 10 000 g/mol. Pour des masses Mn trop basses, il existe un risque de migration du plastifiant à l'extérieur de la composition, tandis que des masses trop élevées peuvent entraîner une rigidification excessive de cette composition. Une masse Mn comprise entre 1 000 et 4 000 g/mol s'est avérée constituer un excellent compromis pour les applications visées, en particulier pour une utilisation dans un pneumatique.

La masse moléculaire moyenne en nombre (Mn) du plastifiant peut être déterminée de manière connue, notamment par SEC, l'échantillon étant préalablement solubilisé dans du tétrahydrofuranne à une concentration d'environ 1 g/l ; puis la solution est filtrée sur filtre de porosité 0,45μm avant injection. L'appareillage est la chaîne chromatographique « WATERS alliance ». Le solvant d'élution est le tétrahydrofuranne, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 μl. Le détecteur est un réfractomètre différentiel «WATERS 2410 » et son logiciel associé d'exploitation des données chromatographiques est le système «WATERS MILLENIUM ». Les masses moléculaires moyennes calculées sont relatives à une courbe d'étalonnage réalisée avec des étalons de polystyrène.

En résumé, le plastifiant liquide est préférentiellement choisi dans le groupe constitué par les élastomères liquides, les huiles polyoléfiniques, les huiles naphténiques, les huiles paraffiniques, les huiles DAE, les huiles MES, les huiles TDAE, les huiles minérales, les huiles végétales, les plastifiants éthers, les plastifiants esters, les plastifiants phosphates, les plastifiants sulfonates et les mélanges de ces composés. Plus préférentiellement, ce plastifiant liquide est choisi dans le groupe constitué par les élastomères liquides, les huiles polyoléfiniques, les huiles végétales et les mélanges de ces composés.

L'homme du métier saura, à la lumière de la description et des exemples de réalisation qui suivent, ajuster la quantité de plastifiant liquide en fonction des conditions particulières d'usage de la composition auto-obturante, notamment du pneumatique dans lequel elle est destinée à être utilisée.

De préférence, le taux de plastifiant liquide est compris dans un domaine de 5 à 40 pce, plus préférentiellement dans un domaine de 10 à 30 pce. En dessous des minima indiqués, la composition élastomère risque de présenter une rigidité trop forte pour certaines applications tandis qu'au-delà des maxima préconisés, on s'expose à un risque de cohésion insuffisante de la composition et de propriétés auto-obturantes dégradées.

*Additifs divers*

Les constituants de base de la couche de produit auto-obturant précédemment décrits, à savoir élastomère diénique insaturé, résine plastifiante hydrocarbonée, plastifiant liquide et charge optionnels sont suffisants à eux seuls pour que la composition auto-obturante remplisse totalement sa fonction anti-crevaison vis-à-vis des pneumatiques dans lesquels elle est utilisée.

Toutefois, divers autres additifs peuvent être ajoutés, typiquement en faible quantité (préférentiellement à des taux inférieurs à 20 pce, plus préférentiellement inférieurs à 15 pce), comme par exemple des agents de protection tels que des anti-UV, anti-oxydants ou anti-ozonants, divers autres stabilisants, des agents colorants avantageusement utilisables pour la coloration de la composition auto-obturante. Selon l'application visée, des fibres, sous forme de fibres courtes ou de pulpe, pourraient être éventuellement ajoutées pour donner plus de cohésion à la composition auto-obturante.

Selon un mode de réalisation préférentiel du second mode de réalisation de la composition de la couche de produit auto-obturant, la composition auto-obturante comporte en outre un système de réticulation de l'élastomère diénique insaturé pouvant être constitué d'un seul ou plusieurs composés. L'agent de réticulation est préférentiellement un agent de réticulation à base de soufre et/ou d'un donneur de soufre. En d'autres termes, l'agent de réticulation est un agent dit "de vulcanisation".

Selon un mode de réalisation préférentiel, l'agent de vulcanisation comporte du soufre et, à titre d'activateur de vulcanisation, un dérivé guanidique c'est-à-dire une guanidine substituée. Les guanidines substituées sont bien connues de l'homme du métier (voir par exemple WO 00/05300) : on citera à titre d'exemples non limitatifs la N,N'-diphénylguanidine (en abrégé "DPG"), la triphénylguanidine ou encore la di-o-tolylguanidine. On utilise de préférence la DPG. Le taux de soufre est par exemple compris entre 0,1 et 1,5 pce, en particulier entre 0,2 et 1,2 pce (notamment entre 0,2 et 1,0 pce) et le taux de dérivé guanidique est lui-même compris entre 0 et 1,5 pce, en particulier entre 0 et 1,0 pce (notamment dans un domaine de 0,2 à 0,5 pce).

Ledit agent de réticulation ou vulcanisation ne nécessite pas la présence d'un accélérateur de vulcanisation. Selon un mode de réalisation préférentiel, la composition peut donc être dépourvue d'un tel accélérateur, ou tout au plus en comporter moins de 1 pce, plus préférentiellement moins de 0,5 pce.

Toutefois, de manière générale, si un tel accélérateur est utilisé, on peut citer comme exemple tout composé (accélérateur dit primaire ou secondaire) susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC"), 1-phényl-2,4-dithiobiuret ("DTB"), dibuthylphosphorodithioate de zinc ("ZBPD"), 2-éthylhexylphosphorodithioate de zinc ("ZDT/S"), disulfure de bis O,O-di(2-éthylhexyl)-thiophosphonyle ("DAPD"), dibutylthiourée ("DBTU"), isopropyl-xanthate de zinc ("ZIX") et les mélanges de ces composés. Selon un autre mode de réalisation avantageux, le système de vulcanisation ci-dessus peut être dépourvu de zinc ou d'oxyde de zinc (connus comme activateurs de vulcanisation), ou tout au plus en comporter moins de 1 pce, plus préférentiellement moins de 0,5 pce.

Selon un autre mode de réalisation particulier préférentiel de l'invention, l'agent de vulcanisation comporte un donneur de soufre. La quantité d'un tel donneur de soufre sera ajustée de préférence entre 0,5 et 15 pce, plus préférentiellement entre 0,5 et 10 pce (notamment entre 1 et 5 pce), notamment de manière à atteindre les taux de soufre équivalents préférentiels indiqués précédemment.

Les donneurs de soufre sont bien connus de l'homme du métier, on citera notamment les polysulfures de thiurame, connus accélérateurs de vulcanisation et ayant pour formule (I) :

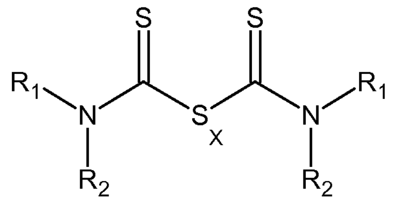

dans laquelle :

- x est un nombre (entier, ou décimal dans le cas de mélanges de polysulfures) qui est égal ou supérieur à deux, de préférence compris dans un domaine de 2 à8;
- $R_1$ et $R_2$, identiques ou différents, représentent un radical hydrocarboné, de préférence choisi parmi les alkyles ayant 1 à 6 atomes de carbone, les cycloalkyles ayant 5 à 7 atomes de carbone, les aryles, aralkyles ou alkaryles ayant 6 à 10 atomes de carbone.

Dans la formule (I) ci-dessus, $R_1$ et $R_2$ pourraient former un radical hydrocarboné bivalent comportant 4 à 7 atomes de carbone.

Ces polysulfures de thiurame sont choisis plus préférentiellement dans le groupe constitué par le disulfure de tétrabenzylthiurame ("TBzTD"), le disulfure de tétraméthylthiurame ("TMTD"), le tétrasulfure de dipentaméthylènethiurame ("DPTT"), et les mélanges de tels composés. Plus préférentiellement est utilisé le $TB_ZTD$, particulièrement aux taux préférentiels indiqués ci-dessus pour un donneur de soufre (soit entre 0,1 et 15 pce, plus préférentiellement entre 0,5 et 10 pce, notamment

entre 1 et 5 pce).

Outre les élastomères solides et autres additifs précédemment décrits, la composition de l'invention pourrait aussi comporter, préférentiellement selon une fraction pondérale minoritaire par rapport au coupage d'élastomères solides A et B, des polymères solides autres que des élastomères, tels que par exemple des polymères thermoplastiques.

Outre les élastomères précédemment décrits, la composition auto-obturante pourrait aussi comporter, toujours selon une fraction pondérale minoritaire par rapport à l'élastomère diénique insaturé, des polymères autres que des élastomères, tels que par exemple des polymères thermoplastiques compatibles avec l'élastomère diénique insaturé.

*Fabrication de la couche de produit auto-obturant*

La composition de la couche de produit auto-obturant selon le second mode de réalisation précédemment décrit peut être fabriquée par tout moyen approprié, par exemple par mélangeage et/ou malaxage dans des mélangeurs à palette ou à cylindres, jusqu'à obtention d'un mélange intime et homogène de ses différents composants.

Toutefois, le problème de fabrication suivant peut se poser : en l'absence de charge, ou tout au moins d'une quantité notable de charge, la composition est faiblement cohésive. Ce manque de cohésion peut être tel que le pouvoir collant de la composition, dû par ailleurs à la présence d'un taux relativement élevé de résine hydrocarbonée, n'est pas compensé et l'emporte ; il s'ensuit alors un risque de collage parasite sur les outils de mélangeage, qui peut être rédhibitoire dans des conditions de mise en oeuvre industrielle.

Pour pallier les problèmes ci-dessus, la composition auto-obturante, lorsqu'elle comporte un système de vulcanisation, peut être préparée selon un procédé comportant les étapes suivantes :

a) on fabrique dans un premier temps un masterbatch comportant au moins l'élastomère diénique insaturé ou selon le cas le coupage des élastomères solides A et B et entre 30 et 90 pce de la résine hydrocarbonée, en mélangeant ces différents composants dans un mélangeur, à une température ou jusqu'à une température dite « température de mélangeage à chaud » (ou « première température ») qui est supérieure à la température de ramollissement de la résine hydrocarbonée ;

b) puis on incorpore audit masterbatch au moins le système de réticulation, en mélangeant le tout, dans le même mélangeur ou dans un mélangeur différent, à une température ou jusqu'à une température dite « seconde température » qui est maintenue inférieure à 100°C, pour l'obtention de ladite composition auto-obturante.

Les première et seconde températures ci-dessus sont bien entendues celles du masterbatch et de la composition auto-obturante, respectivement, mesurables in situ et non pas les températures de consigne des mélangeurs eux-mêmes.

Par « masterbatch » (ou « mélange-maître ») doit être entendu ici, par définition, le mélange d'au moins l'élastomère diénique et de la résine hydrocarbonée, mélange précurseur de la composition auto-obturante finale, prête à l'emploi.

Le plastifiant liquide peut être incorporé à tout moment, en tout ou partie, notamment au cours de la fabrication du masterbatch lui-même (dans ce cas, avant, pendant ou après incorporation de la résine hydrocarbonée dans l'élastomère diénique), « à chaud » (c'est-à-dire à température supérieure à la température de ramollissement de la résine) comme à une température plus basse, ou par exemple après la fabrication du masterbatch (dans ce cas, avant, pendant ou après ajout du système de réticulation).

Peuvent être éventuellement incorporés à ce masterbatch divers additifs, qu'ils soient destinés au masterbatch proprement dit (par exemple un agent de stabilisation, un agent colorant ou anti-UV, un antioxydant, etc.) ou à la composition auto-obturante finale à laquelle est destiné le masterbatch.

Un tel procédé s'est avéré particulièrement bien adapté à la fabrication rapide, dans des conditions de mise en oeuvre acceptables du point de vue industriel, d'une composition auto-obturante performante, cette composition pouvant comporter des taux élevés de résine hydrocarbonée sans nécessiter notamment l'emploi d'un plastifiant liquide à un taux particulièrement élevé.

C'est au cours de l'étape a) de mélangeage à chaud que l'élastomère diénique est mis au contact de la résine hydrocarbonée pour fabrication du masterbatch. A l'état initial, c'est-à-dire avant son contact avec l'élastomère, la résine peut se présenter à l'état solide ou à l'état liquide. De préférence, pour un meilleur mélangeage, l'élastomère diénique solide est mis au contact de la résine hydrocarbonée à l'état liquide. Il suffit pour cela de chauffer la résine à une température supérieure à sa température de ramollissement. Selon le type de résine hydrocarbonée utilisée, la température de mélangeage à chaud est typiquement supérieure à 70°C, le plus souvent supérieure à 90°C, par exemple comprise entre 100°C et 150°C.

On préfère introduire, au moins en partie, le plastifiant liquide au cours de l'étape a) de fabrication du masterbatch lui-même, plus préférentiellement dans ce cas soit en même temps que la résine hydrocarbonée, soit après introduction de cette dernière. Selon un mode de réalisation particulièrement avantageux, un mélange de la résine hydrocarbonée et du plastifiant liquide pourra être préparé préalablement à l'incorporation dans l'élastomère diénique.

L'étape b) d'incorporation du système de réticulation est conduite à une température préférentiellement inférieure à 80°C, par ailleurs inférieure préférentiellement à la température de ramollissement de la résine. Ainsi, selon le type de résine hydrocarbonée utilisée, la température de mélangeage de l'étape b) est préférentiellement inférieure à 50°C, plus préférentiellement comprise entre 20°C et 40°C.

Entre les étapes a) et b) ci-dessus peut être intercalée, si nécessaire, une étape intermédiaire de refroidissement du masterbatch afin d'amener sa température à une valeur inférieure à 100°C, préférentiellement inférieure à 80°C, notamment inférieure à la température de ramollissement de la résine, ceci avant introduction (étape b)) du système de réticulation dans le masterbatch précédemment préparé.

Lorsqu'une charge telle que du noir de carbone est utilisée, elle peut être introduite au cours de l'étape a) c'est-à-dire en même temps que l'élastomère diénique insaturé et la résine hydrocarbonée, ou bien au cours de l'étape b) c'est-à-dire en même temps que le système de réticulation. On a constaté qu'une très faible proportion de noir de carbone, préférentiellement comprise entre 0,5 et 2 pce, améliorait encore le mélangeage et la fabrication de la composition, ainsi que son extrudabilité finale.

L'étape a) de fabrication du masterbatch est réalisée de préférence dans un mélangeur-extrudeur à vis tel que schématisé par exemple de manière simple à la figure 9.

On voit sur cette figure 9 un mélangeur-extrudeuse à vis 200 comportant essentiellement une vis (par exemple une mono-vis) d'extrusion 210, une première pompe de dosage 220 pour l'élastomère diénique (solide) et au moins une deuxième pompe de dosage 230 pour la résine (solide ou liquide) et le plastifiant liquide. La résine hydrocarbonée et le plastifiant liquide peuvent être introduits par exemple au moyen d'une pompe de dosage unique, s'ils ont déjà été mélangés préalablement, ou bien être introduits séparément au moyen d'une deuxième pompe et troisième pompe (troisième pompe non représentée sur la figure 9, pour simplification), respectivement. Les pompes de dosages 220, 230 permettent de monter en pression tout en conservant la maîtrise du dosage et les caractéristiques initiales des matériaux, la dissociation des fonctions de dosages (élastomère, résine et plastifiant liquide) et de mélangeage offrant en outre une meilleure maîtrise du procédé.

Les produits, poussés par la vis d'extrusion, sont intimement mélangés sous le très fort cisaillement apporté par la rotation de la vis, progressant ainsi à travers le mélangeur, par exemple jusqu'à une partie 240 dite « hacheur-homogénéisateur », zone à la sortie de laquelle le masterbatch final 250 ainsi obtenu, progressant dans le sens de la flèche F, est finalement extrudé à travers une filière 260 permettant d'extruder le produit aux dimensions souhaitées.

Le masterbatch ainsi extrudé, prêt à être utilisé, est ensuite transféré et refroidi par exemple sur un mélangeur externe à cylindres pour introduction du système de réticulation et de la charge optionnelle, la température à l'intérieur dudit mélangeur externe étant maintenue inférieure à 100°C, de préférence inférieure à 80°C, et par ailleurs étant préférentiellement inférieure à la température de ramollissement de la résine. Avantageusement, les cylindres ci-dessus sont refroidis, par exemple par circulation d'eau, à une température inférieure à 40°C, de préférence inférieure à 30°C, de manière à éviter tout collage parasite de la composition sur les parois du mélangeur.

Il est possible de mettre directement en forme le masterbatch en sortie du dispositif d'extrusion 200 pour faciliter son transport et/ou sa mise en place dans le mélangeur externe. On peut aussi utiliser une alimentation en continu du mélangeur externe à cylindres.

Grâce au dispositif spécifique et au procédé préférentiels décrits ci-dessus, il est possible de préparer la composition de la couche de produit auto-obturant dans des conditions industrielles satisfaisantes, sans risque de pollution des outils due à un collage parasite de la composition sur les parois des mélangeurs.

**III. Fabrication des pneumatiques**

Les pneumatiques des figures 5 et 7 peuvent être fabriqués, comme l'indique le document WO 2011/032886 en intégrant une couche de produit auto-obturant dans une ébauche non vulcanisée de pneumatique en utilisant un tambour de fabrication et les autres techniques usuelles dans la fabrication des bandages pneumatiques.

Plus précisément, une couche de protection, par exemple un film thermoplastique chloré, est appliquée en premier sur le tambour de fabrication. Cette couche de protection peut être enroulée tout autour du tambour de fabrication puis soudée. On peut aussi mettre en place un manchon de protection soudé au préalable. On applique ensuite, successivement, tous les autres composants usuels du pneumatique.

La couche de produit auto-obturant est disposée directement sur la couche de protection. Cette couche a été au préalable pré-formée par toute technique connue, par exemple extrusion ou calandrage. Son épaisseur est préférentiellement supérieure à 0,3 mm, plus préférentiellement comprise entre 0,5 et 10 mm (en particulier pour des bandages pneumatiques de véhicules de tourisme entre 1 et 5 mm). Une couche étanche est alors mise en place sur la couche de produit auto-obturant, suivie par la nappe carcasse.

Dans un procédé de fabrication deux temps, l'ébauche de pneumatique est alors conformée pour prendre la forme d'un tore. La couche de protection constituée d'une composition à base d'un film polymère thermoplastique chloré a une rigidité suffisamment faible, une extensibilité uniaxiale et biaxiale suffisantes et est suffisamment liée à la surface de la couche de produit auto-obturant en raison du collant de celle-ci pour suivre les mouvements de l'ébauche de pneumatique sans se

décoller ni se déchirer.

Après la conformation, les nappes sommet et la bande de roulement sont mises en place sur l'ébauche du pneumatique. L'ébauche ainsi achevée est placée dans un moule de cuisson et est vulcanisée. Pendant la vulcanisation, la couche de protection protège la membrane de cuisson du moule de tout contact avec la couche de produit auto-obturant.

A la sortie du moule de cuisson, la couche de protection reste attachée à la couche de produit auto-obturant. Cette couche de protection ne comporte aucune fissure ni déchirure et se décolle sans aucune difficulté de la membrane de cuisson.

Les pneumatiques des figures 5 et 7 peuvent aussi être fabriqués en utilisant un noyau rigide imposant la forme de la cavité intérieure du bandage. Dans ce procédé, on applique alors en premier la couche de protection sur la surface du noyau, puis l'ensemble des autres constituants du pneumatique. L'application sur le noyau est réalisée dans l'ordre requis par l'architecture finale. Les constituants du pneumatique sont disposés directement à leur place finale, sans subir de conformation à aucun moment de la confection. Cette confection peut notamment utiliser les dispositifs décrits dans le brevet EP 0 243 851 pour la pose des fils du renfort de carcasse, EP 0 248 301 pour la pose des renforts de sommet et EP 0 264 600 pour la pose des gommes caoutchouteuses. Le pneumatique peut être moulé et vulcanisé comme exposé dans le brevet US 4 895 692. La présence de la couche de protection permet, comme dans le cas de la membrane de cuisson, de séparer aisément le pneumatique du noyau à l'issue de la phase de vulcanisation.

Il est aussi possible de mettre en place la couche de produit auto-obturant après la vulcanisation du pneumatique par tout moyen approprié, par exemple par collage, par pulvérisation ou encore extrusion directe sur la surface interne du pneumatique.

Les couches de produit auto-obturant présentées aux figures 5 et 7 correspondent au second mode de réalisation décrit précédemment. Ces couches sont constituées d'une composition auto-obturante comportant les trois constituants essentiels que sont du caoutchouc naturel (100 pce), environ 50 pce de résine hydrocarbonée ("Escorez 2101" de la société Exxon Mobil - point de ramollissement égal à environ 90°C) et environ 15 pce de polybutadiène liquide ("Ricon 154" de la société Sartomer Cray Valley - Mn égale à 5200 environ) ; elle comporte en outre une très faible quantité (1 pce) de noir de carbone (N772).

La composition auto-obturante ci-dessus a été préparée à l'aide d'une extrudeuse mono-vis (L/D = 40) telle que schématisée à la figure 9 (déjà commentée précédemment) ; le mélange des trois constituants de base (NR, résine et plastifiant liquide) a été réalisé à une température (comprise entre 100 et 130°C) supérieure à la température de ramollissement de la résine. L'extrudeuse utilisée comportait deux alimentations (trémies) différentes (NR d'une part, résine et plastifiant liquide d'autre part préalablement mélangés à un température de 130 à 140°C environ) et une pompe d'injection liquide sous pression pour le mélange résine/ plastifiant liquide (injecté à une température de 100 à 110°C environ); quand l'élastomère, la résine et le plastifiant liquide sont ainsi intimement mélangés, on a constaté que le pouvoir collant parasite de la composition diminuait de manière très significative.

Des résultats similaires ont été obtenus en utilisant comme couche de produit auto-obturant une composition comportant un élastomère thermoplastique styrénique TPS, telle que précédemment décrite.

L'extrudeuse ci-dessus était pourvue d'une filière permettant d'extruder le masterbatch aux dimensions voulues vers un mélangeur externe à cylindres, pour incorporation finale des autres constituants, à savoir le système de vulcanisation à base de soufre (par exemple 0,5 ou 1,2 pce) et DPG (par exemple 0,3 pce) et du noir de carbone (à un taux de 1 pce), à basse température maintenue à une valeur inférieure à +30°C (refroidissement des cylindres par circulation d'eau).

## IV. Résultats obtenus

IV-1. Résistance à la perforation

Des tests ont été réalisés sur des pneumatiques correspondant aux figures 5 (pneumatique B) et 4 (pneumatique T) avec et sans couche de produit auto-obturant 55 montés sur des jantes et un véhicule similaires aux tests précédents. La couche de produit auto-obturant avait une épaisseur de 3 mm.

Sur un des pneumatiques monté et gonflé, huit perforations de 5 mm de diamètre ont été réalisées, à travers la bande de roulement et le bloc sommet à l'aide de poinçons qui ont été immédiatement retirés.

Ce pneumatique a résisté à un roulage sur volant à 150 km/h, sous une charge nominale de 400 kg, sans perte de pression pendant plus de 1 500 km, distance au-delà de laquelle le roulage a été stoppé.

Sur un autre pneumatique, on a procédé de la même façon en laissant cette fois en place les objets perforants, pendant une semaine. Le même excellent résultat a été obtenu.

Sans composition auto-obturante et dans les mêmes conditions que ci-dessus, le pneumatique ainsi perforé perd sa pression en moins d'une minute, devenant totalement inapte au roulage.

On a conduit d'autres part des tests d'endurance sur des pneumatiques conformes à l'invention, identiques aux précédents, mais ayant roulé 750 km, jusqu'à une vitesse de 150 km/h, en laissant cette fois en place les poinçons dans leurs perforations. Après extraction des poinçons (ou expulsion de ces derniers suite au roulage), ces bandages pneumatiques de l'invention ont résisté au roulage sur volant sans perte de pression, dans les mêmes conditions que précédemment (distance parcourue de 1 500 km à une vitesse de 150 km/h et sous une charge nominale de 400 kg).

IV-2. Résistance « pinch shock »

La figure 6 montre des résultats de calculs concernant un flanc de pneumatique soumis à de grandes déformations. On a tracé la tension répartie T (en daN/cm) en fonction de la charge Z (en daN). Les courbes 11 et 12 correspondent au pneumatique de référence de la figure 4 (configuration « shoulder lock »). L'armature de carcasse comprend des renforts 220x2 (chaque élément de renforcement consiste de deux fils ayant chacun une masse linéique de 200 tex) en PET. La force à la rupture de chaque élément de renforcement est de 268 daN/cm, ce qui signifie que la force à la rupture totale est égale à 528 daN/cm. La courbe 11 représente la tension reprise par les éléments de renforcement du brin aller 62 de l'armature de carcasse, la courbe 12 celle reprise par les éléments de renforcement du brin retour 63. On constate que lorsque la charge est importante, ce sont les éléments de renforcement du brin retour qui reprennent davantage de tension. Les courbes 21 et 22 correspondent au pneumatique de la figure 5. L'armature de carcasse comprend des renforts 144x2 en PET. La force à la rupture de chaque élément de renforcement est de 187 daN/cm. L'armature de renfort supplémentaire comprend des renforts 334x2 en PET. La force à la rupture de chaque élément de renforcement est de 328 daN/cm. La force à la rupture totale est donc égale à 515 daN/cm. La courbe 21 représente la tension reprise par les éléments de renforcement de l'armature de carcasse 60, la courbe 22 celle reprise par les éléments de renforcement de l'armature de renfort supplémentaire 120. Bien que la force à la rupture totale soit inférieure, le pneumatique selon l'invention rompt à des charges significativement plus élevées que le pneumatique de référence, ce qui illustre bien l'intérêt d'associer une armature de carcasse « sous-dimensionnée » avec une armature de renforcement supplémentaire dont la force à la rupture est plus importante.

Ces résultats de calcul ont par la suite été confirmés par des essais sur pneumatique.

## Revendications

1. Pneumatique en forme de tore possédant une surface intérieure et une surface extérieure, la surface intérieure étant, au moins en partie recouverte d'une couche étanche (50), le pneumatique ayant un axe de rotation (2) et comportant :

   deux bourrelets (20) destinés à entrer en contact avec une jante de montage (5), chaque bourrelet comportant au moins une structure annulaire de renforcement (70) ayant un point (71) radialement le plus à l'intérieur,

   deux flancs (30) prolongeant les bourrelets radialement vers l'extérieur, les deux flancs s'unissant dans un sommet (25) comportant une armature de sommet (80, 90), radialement surmontée d'une bande de roulement (40) ;

   une armature de carcasse (60) radiale constituée d'éléments de renforcement (61) filaires ayant un allongement à la rupture $AR_C$ et une force à la rupture $FR_C$, posés à un pas de pose $P_C$ et enrobés de composition caoutchouteuse, l'armature de carcasse s'étendant d'un bourrelet à l'autre, en passant par le sommet, l'armature de carcasse étant ancrée dans chaque bourrelet par un retournement autour de ladite au moins une structure annulaire de renforcement, de manière à former un brin aller (62) et un brin retour (63), l'armature de carcasse étant dimensionnée de manière à satisfaire l'inégalité :

$$\frac{FR_C}{P_C} \leq 1.5 \cdot 10^6 \cdot \frac{\left(R_S^2 - R_E^2\right)}{R_T},$$

   où $FR_C$ est exprimé en Newton, $R_S$ est la distance radiale entre l'axe de rotation du pneumatique et le point (360) radialement le plus à l'extérieur de l'armature de carcasse, $R_E$ est la distance radiale entre l'axe de rotation du pneumatique et la position axiale où le pneumatique atteint sa largeur axiale maximale, et $R_T$ est la distance radiale entre l'axe de rotation du pneumatique et le point radialement le plus à l'intérieur de ladite au moins une structure annulaire de renforcement, le pas de pose $P_C$ et les distances radiales $R_S$, $R_E$ et $R_T$ étant exprimées en mètres ;

   chaque flanc du pneumatique comportant en outre une armature de renfort supplémentaire (120) constituée d'éléments de renforcement filaires ayant un allongement à la rupture $AR_S$ et une force à la rupture $FR_S$, posés à un pas de pose $P_S$ et enrobés de composition caoutchouteuse, l'armature de renfort supplémentaire s'étendant entre une extrémité (121) radialement intérieure située à proximité de ladite au moins une structure annulaire de renforcement du bourrelet que prolonge le flanc, et une extrémité (122) radialement extérieure située radialement entre l'armature de carcasse et l'armature de sommet,

   dans lequel $AR_S$, $FR_S$, $P_S$, $AR_C$, $FR_C$ et $P_C$, sont choisis tels que

$$\frac{FR_S}{P_S} \geq 1.3 \cdot \frac{FR_C}{P_C},$$

et

$$AR_C \geq AR_S,$$

étant précisé que les forces à la rupture $FR_S$ et $FR_C$, ainsi que les allongements à la rupture $AR_C$ et $AR_S$ sont déterminés sur les éléments de renforcement après extraction du pneumatique cuit,
ladite couche étanche étant, au moins en partie, recouverte d'une couche (55) de produit auto-obturant.

2. Pneumatique selon la revendication 1, dans lequel l'armature de sommet (80, 90) a, dans chaque section radiale, deux extrémités axiales (180) et dans lequel l'extrémité (122) radialement extérieure de chacune des deux armatures de renfort supplémentaire est axialement à l'intérieur de l'extrémité axiale de l'armature de sommet la plus proche, la distance axiale (DA) entre l'extrémité radialement extérieure de chaque armature de renfort supplémentaire et de l'extrémité axiale de l'armature de sommet la plus proche étant supérieure ou égale à 10 mm.

3. Pneumatique selon l'une quelconque des revendications 1 ou 2, dans lequel l'extrémité (121) radialement intérieure de chaque armature de renfort supplémentaire (120) est radialement à l'intérieur du point (64) radialement le plus à l'extérieur du brin retour (63) de l'armature de carcasse (60) et la distance radiale (DR) entre l'extrémité (121) radialement intérieure de chaque armature de renfort supplémentaire et le point (64) radialement le plus à l'extérieur du brin retour de l'armature de carcasse est supérieur ou égal à 10 mm.

4. Pneumatique selon l'une quelconque des revendications 1 à 3, dans lequel chaque armature de renfort supplémentaire (120) s'étend, dans le bourrelet (20), le long du brin aller (62) de l'armature de carcasse (60).

5. Pneumatique selon la revendication 4, dans lequel l'armature de carcasse (60) et l'armature de renfort supplémentaire (120) comportent chacune au moins une soudure par recouvrement et dans lequel la soudure de l'armature de carcasse est décalée, dans la direction circonférentielle, par rapport à la soudure de l'armature de renfort supplémentaire.

6. Pneumatique selon l'une quelconque des revendications 1 à 3, dans lequel chaque armature de renfort supplémentaire (120) s'étend, dans le bourrelet (20), le long du brin retour (63) de l'armature de carcasse (60).

7. Pneumatique selon l'une quelconque des revendications 1 à 4, dans lequel les éléments de renforcement de chaque armature de renfort supplémentaire (120) sont orientés radialement.

8. Pneumatique selon l'une quelconque des revendications 1 à 4, dans lequel les éléments de renforcement de chaque armature de renfort supplémentaire (120) sont inclinés à un angle compris entre 40° et 80°, et de préférence entre 40° et 50°, par rapport à la direction radiale.

9. Pneumatique selon l'une quelconque des revendications 1 à 7, dans lequel les éléments de renforcement de l'armature de renfort supplémentaire (120) sont réalisés en PET.

10. Pneumatique selon l'une quelconque des revendications 1 à 7, dans lequel les éléments de renforcement de l'armature de renfort supplémentaire (120) sont des câbles hybrides aramide/nylon.

11. Pneumatique selon l'une quelconque des revendications 1 à 7, dans lequel les éléments de renforcement de l'armature de renfort supplémentaire (120) sont des câbles en aramide ou des câbles hybrides aramide/PET.

12. Pneumatique selon l'une quelconque des revendications précédentes, dans lequel la couche (55) de produit auto-obturant est disposée sur la couche étanche (50) en regard du sommet.

13. Pneumatique selon la revendication 12, dans lequel ladite couche de produit auto-obturant s'étend sur la couche étanche en regard d'au moins une partie desdits flancs, de manière à ce que, dans chaque flanc, le point (56) radialement le plus à l'intérieur de la couche (55) de produit auto-obturant se trouve radialement à l'intérieur de l'extrémité (122) radialement extérieure de l'armature de renfort supplémentaire (120).

14. Pneumatique selon l'une quelconque des revendications précédentes, dans lequel la couche (55) de produit auto-obturant comporte au moins (pce signifiant parties en poids pour cent parties d'élastomère) un élastomère thermoplastique styrénique (dit « TPS ») et plus de 200 pce d'une huile d'extension dudit élastomère.

15. Pneumatique selon la revendication 14, dans lequel le TPS est l'élastomère majoritaire de la couche (55) de produit auto-obturant.

16. Pneumatique selon l'une quelconque des revendications 14 et 15, dans lequel l'élastomère TPS est choisi dans le groupe constitué par les copolymères

blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

**17.** Pneumatique selon la revendication 16, dans lequel l'élastomère TPS est choisi dans le groupe constitué par les copolymères SEBS, les copolymères SEPS et les mélanges de ces copolymères.

**18.** Pneumatique selon l'une quelconque des revendications 1 à 13, dans lequel la couche (55) de produit auto-obturant comporte au moins (pce signifiant parties en poids pour cent parties d'élastomère solide) :

(a) à titre d'élastomère majoritaire, un élastomère diénique insaturé ;
(b) entre 30 et 90 pce d'une résine hydrocarbonée ;
(c) un plastifiant liquide dont la Tg (température de transition vitreuse) est inférieure à -20°C, à un taux pondéral compris entre 0 et 60 pce ; et
(d) de 0 à moins de 120 pce d'une charge.

**19.** Pneumatique selon la revendication 18, dans lequel l'élastomère diénique insaturé est choisi dans le groupe constitué par les polybutadiènes, le caoutchouc naturel, les polyisoprènes de synthèse, les copolymères de butadiènes, les copolymères d'isoprène et les mélanges de tels élastomères.

**20.** Pneumatique selon la revendication 19, dans lequel l'élastomère diénique insaturé est un élastomère isoprénique, de préférence choisi dans le groupe constitué par le caoutchouc naturel, les polyisoprènes de synthèse et les mélanges de tels élastomères.

**21.** Pneumatique selon la revendication 19, dans lequel l'élastomère diénique insaturé est un coupage d'au moins deux élastomère solides, un élastomère polybutadiène ou copolymère de butadiène, dit « élastomère A », et un élastomère caoutchouc naturel ou polyisoprène de synthèse, dit « élastomère B », le rapport pondéral élastomère A : élastomère B étant compris dans un domaine de 10:90 à 90:10.

**22.** Pneumatique selon la revendication 21, dans lequel le rapport pondéral élastomère A : élastomère B est compris dans un domaine de 20:80 à 80:20, de préférence de 30:70 à 70:30.

**23.** Pneumatique selon l'une quelconque des revendications 18 à 22, comportant 0 à moins de 100 pce de charge, de préférence 0 à moins de 70 pce de charge, dont 0 à moins de 15 pce de charge renforçante, de préférence 0 à moins de 10 pce de charge renforçante.

**24.** Pneumatique selon l'une quelconque des revendications 18 à 23, comportant de 0 à 70 pce de charge dont 0 à moins de 5 pce de charge renforçante.

**25.** Pneumatique selon l'une quelconque des revendications 18 à 24, comportant de 5 à 70 pce de charge autre que renforçante, préférentiellement de 5 à 30 pce.

**26.** Pneumatique selon l'une quelconque des revendications 18 à 25, comportant en outre un agent de réticulation comportant du soufre ou un donneur de soufre.

**27.** Pneumatique selon la revendication 26, dans lequel le donneur de soufre est un polysulfure de thiurame, de préférence le disulfure de tétrabenzylthiurame (TBzTD).

## Patentansprüche

**1.** Torusförmiger Reifen, der eine Innenfläche und eine Außenfläche besitzt, wobei die Innenfläche wenigstens teilweise von einer dichten Schicht (50) bedeckt ist, wobei der Reifen eine Drehachse (2) aufweist und umfasst:

zwei Wülste (20), die dazu bestimmt sind, mit einer Montagefelge (5) in Kontakt zu kommen, wobei jeder Wulst wenigstens eine ringförmige Verstärkungsstruktur (70) mit einem radial innersten Punkt (71) aufweist,
zwei Seitenwände (30), welche die Wülste radial nach außen verlängern, wobei sich die zwei Seitenwände in einem Scheitel (25) treffen, der eine Scheitelbewehrung (80, 90) aufweist, die radial von einem Laufstreifen (40) überlagert wird;
eine radiale Karkassenbewehrung (60), die aus drahtförmigen Verstärkungselementen (61) mit einer Bruchdehnung $AR_C$ und einer Bruchkraft $FR_C$ besteht, die mit einem Verlegeabstand $P_C$ angeordnet sind und mit einer Kautschukzusammensetzung umhüllt sind, wobei sich die Karkassenbewehrung von einem Wulst zum anderen erstreckt, wobei sie durch den Scheitel verläuft, wobei die Karkassenbewehrung in jedem Wulst durch einen Umschlag um die wenigstens eine ringförmige Verstärkungsstruktur verankert ist, derart, dass ein abgehender Abschnitt (62) und ein zurückführender Abschnitt (63) gebildet werden, wobei die Karkassenbewehrung derart bemessen ist, dass die Ungleichung

$$\frac{FR_C}{P_C} \leq 1,5 \cdot 10^6 \cdot \frac{(R_S^2 - R_E^2)}{R_T}$$

erfüllt ist, wobei $FR_C$ in Newton angegeben ist, $R_S$ der radiale Abstand zwischen der Drehachse des Reifens und dem radial äußersten Punkt (360) der Karkassenbewehrung ist, $R_E$ der radiale Abstand zwischen der Drehachse des Reifens und der axialen Position ist, in welcher der Reifen seine maximale axiale Breite erreicht, und $R_T$ der radiale Abstand zwischen der Drehachse des Reifens dem radial innersten Punkt der wenigstens einen ringförmigen Verstärkungsstruktur ist, wobei der Verlegeabstand $P_C$ und die radialen Abstände $R_S$, $R_E$ und $R_T$ in Metern angegeben sind;
wobei jede Seitenwand des Reifens außerdem eine zusätzliche Verstärkungsbewehrung (120) aufweist, die aus drahtförmigen Verstärkungselementen mit einer Bruchdehnung $AR_S$ und einer Bruchkraft $FR_S$ besteht, die mit einem Verlegeabstand $P_S$ angeordnet sind und mit einer Kautschukzusammensetzung umhüllt sind, wobei sich die zusätzliche Verstärkungsbewehrung zwischen einem radial inneren Ende (121), das sich in der Nähe der wenigstens einen ringförmigen Verstärkungsstruktur des Wulstes befindet, den die Seitenwand verlängert, und einem radial äußeren Ende (122), das sich radial zwischen der Karkassenbewehrung und der Scheitelbewehrung befindet, erstreckt,
wobei $AR_S$, $FR_S$, $P_S$, $AR_C$, $FR_C$ und $P_C$ derart gewählt sind, dass

$$\frac{FR_S}{P_S} \geq 1,3 \cdot \frac{FR_C}{P_C}$$

und

$$AR_C \geq AR_S,$$

wobei die Bruchkräfte $FR_S$ und $FR_C$ sowie die Bruchdehnungen $AR_C$ und $AR_S$ an den Verstärkungselementen nach Entnahme aus dem vulkanisierten Reifen bestimmt werden,
wobei die dichte Schicht wenigstens teilweise von einer Schicht (55) eines selbstdichtenden Produkts bedeckt ist.

**2.** Reifen nach Anspruch 1, wobei die Scheitelbewehrung (80, 90) in jedem radialen Schnitt zwei axiale Enden (180) aufweist und wobei sich das radial äußere Ende (122) jeder der zwei zusätzlichen Verstärkungsbewehrungen axial innerhalb des nächstgelegenen axialen Endes der Scheitelbewehrung befindet, wobei der axiale Abstand (DA) zwischen dem radial äußeren Ende jeder zusätzlichen Verstärkungsbewehrung und dem nächstgelegenen axialen Ende der Scheitelbewehrung größer als oder gleich 10 mm ist.

**3.** Reifen nach einem der Ansprüche 1 oder 2, wobei sich das radial innere Ende (121) jeder zusätzlichen Verstärkungsbewehrung (120) radial innerhalb des radial äußersten Punktes (64) des zurückführenden Abschnitts (63) der Karkassenbewehrung (60) befindet und der radiale Abstand (DR) zwischen dem radial inneren Ende (121) jeder zusätzlichen Verstärkungsbewehrung und dem radial äußersten Punkt (64) des zurückführenden Abschnitts der Karkassenbewehrung größer als oder gleich 10 mm ist.

**4.** Reifen nach einem der Ansprüche 1 bis 3, wobei sich jede zusätzliche Verstärkungsbewehrung (120) in dem Wulst (20) entlang des abgehenden Abschnitts (62) der Karkassenbewehrung (60) erstreckt.

**5.** Reifen nach Anspruch 4, wobei die Karkassenbewehrung (60) und die zusätzliche Karkassenbewehrung (120) jeweils wenigstens eine Überdeckungs-Schweißstelle aufweisen und wobei die Schweißstelle der Karkassenbewehrung bezüglich der Schweißstelle der zusätzlichen Verstärkungsbewehrung in der Umfangsrichtung versetzt ist.

**6.** Reifen nach einem der Ansprüche 1 bis 3, wobei sich jede zusätzliche Verstärkungsbewehrung (120) in dem Wulst (20) entlang des zurückführenden Abschnitts (63) der Karkassenbewehrung (60) erstreckt.

**7.** Reifen nach einem der Ansprüche 1 bis 4, wobei die Verstärkungselemente jeder zusätzlichen Verstärkungsbewehrung (120) radial ausgerichtet sind.

**8.** Reifen nach einem der Ansprüche 1 bis 4, wobei die Verstärkungselemente jeder zusätzlichen Verstärkungsbewehrung (120) um einen Winkel zwischen 40° und 80° und vorzugsweise zwischen 40° und 50° bezüglich der radialen Richtung geneigt sind.

**9.** Reifen nach einem der Ansprüche 1 bis 7, wobei die Verstärkungselemente der zusätzlichen Verstärkungsbewehrung (120) aus PET hergestellt sind.

**10.** Reifen nach einem der Ansprüche 1 bis 7, wobei die Verstärkungselemente der zusätzlichen Verstärkungsbewehrung (120) Hybridseile aus Aramid/Nylon sind.

**11.** Reifen nach einem der Ansprüche 1 bis 7, wobei die

Verstärkungselemente der zusätzlichen Verstärkungsbewehrung (120) Seile aus Aramid oder Hybridseile aus Aramid/PET sind.

**12.** Reifen nach einem der vorhergehenden Ansprüche, wobei die Schicht (55) eines selbstdichtenden Produkts auf der dichten Schicht (50) gegenüber dem Scheitel angeordnet ist.

**13.** Reifen nach Anspruch 12, wobei sich die Schicht eines selbstdichtenden Produkts auf der dichten Schicht gegenüber wenigstens einem Teil der Seitenwände so erstreckt, dass sich in jeder Seitenwand der radial innerste Punkt (56) der Schicht (55) eines selbstdichtenden Produkts radial innerhalb des radial äußeren Endes (122) der zusätzlichen Verstärkungsbewehrung (120) befindet.

**14.** Reifen nach einem der vorhergehenden Ansprüche, wobei die Schicht (55) eines selbstdichtenden Produkts wenigstens ein styrolhaltiges thermoplastisches Elastomer (sogenanntes "TPS") und über 200 pce eines Verlängerungsöls dieses Elastomers umfasst (wobei "pce" Gewichtsteile pro hundert Teile Elastomer bedeutet).

**15.** Reifen nach Anspruch 14, wobei TPS das überwiegende Elastomer der Schicht (55) eines selbstdichtenden Produkts ist.

**16.** Reifen nach einem der Ansprüche 14 und 15, wobei das Elastomer TPS aus der Gruppe ausgewählt ist, die aus den Blockcopolymeren Styrol-Butadien-Styrol (SBS), Styrol-Isopren-Styrol (SIS), Styrol-Isopren-Butadien-Styrol (SIBS), Styrol-Ethylen-Butylen-Styrol (SEBS)" Styrol-Ethylen-Propylen-Styrol (SEPS), Styrol-Ethylen-Ethylen-Propylen-Styrol (SEEPS) und den Mischungen dieser Copolymere besteht.

**17.** Reifen nach Anspruch 16, wobei das Elastomer TPS aus der Gruppe ausgewählt ist, die aus den Copolymeren SEBS, den Copolymeren SEPS und den Mischungen dieser Copolymere besteht.

**18.** Reifen nach einem der Ansprüche 1 bis 13, wobei die Schicht (55) eines selbstdichtenden Produkts wenigstens umfasst (wobei "pce" Gewichtsteile pro hundert Teile festes Elastomer bedeutet):

(a) als überwiegendes Elastomer ein ungesättigtes dienisches Elastomer;
(b) zwischen 30 und 90 pce eines Kohlenwasserstoffharzes;
(c) einen flüssigen Weichmacher, dessen Tg (Glasübergangstemperatur) niedriger als - 20 °C ist, mit einem Gewichtsanteil zwischen 0 und 60 pce; und
(d) 0 bis weniger als 120 pce eines Füllstoffs.

**19.** Reifen nach Anspruch 18, wobei das ungesättigte dienische Elastomer aus der Gruppe ausgewählt ist, die aus Polybutadienen, Naturkautschuk, synthetischen Polyisoprenen, Copolymeren von Butadienen, Copolymeren von Isopren und den Mischungen solcher Elastomere besteht.

**20.** Reifen nach Anspruch 19, wobei das ungesättigte dienische Elastomer ein isoprenhaltiges Elastomer ist, das vorzugsweise aus der Gruppe ausgewählt ist, die aus Naturkautschuk, synthetischen Polyisoprenen und den Mischungen solcher Elastomere besteht.

**21.** Reifen nach Anspruch 19, wobei das ungesättigte dienische Elastomer ein Verschnitt wenigstens zweier fester Elastomere ist, eines Elastomers, welches ein Polybutadien oder Butadiencopolymer ist, "Elastomer A" genannt, und eines Elastomers, welches Naturkautschuk oder ein synthetisches Polyisopren ist, "Elastomer B" genannt, wobei das Gewichtsverhältnis "Elastomer A : Elastomer B" im Bereich von 10:90 bis 90:10 liegt.

**22.** Reifen nach Anspruch 21, wobei das Gewichtsverhältnis "Elastomer A : Elastomer B" im Bereich von 20:80 bis 80:20, vorzugsweise von 30:70 bis 70:30 liegt.

**23.** Reifen nach einem der Ansprüche 18 bis 22, welcher 0 bis weniger als 100 pce Füllstoff, vorzugsweise 0 bis weniger als 70 pce Füllstoff aufweist, davon 0 bis weniger als 15 pce verstärkenden Füllstoff, vorzugsweise 0 bis weniger als 10 pce verstärkenden Füllstoff.

**24.** Reifen nach einem der Ansprüche 18 bis 23, welcher 0 bis 70 pce Füllstoff aufweist, davon 0 bis weniger als 5 pce verstärkenden Füllstoff.

**25.** Reifen nach einem der Ansprüche 18 bis 24, welcher 5 bis 70 pce Füllstoff, welcher kein verstärkender Füllstoff ist, aufweist, vorzugsweise 5 bis 30 pce.

**26.** Reifen nach einem der Ansprüche 18 bis 25, welcher außerdem ein Vernetzungsmittel aufweist, welches Schwefel oder einen Schwefeldonor aufweist.

**27.** Reifen nach Anspruch 26, wobei der Schwefeldonor ein Thiurampolysulfid ist, vorzugsweise Tetrabenzylthiuramdisulfid (TBzTD).

## Claims

**1.** Tyre in the form of a torus having an internal wall

and an external wall, the internal wall being, at least in part, covered with an airtight layer (50), the tyre having an axis of rotation (2) and comprising:

two beads (20) intended to come into contact with a mounting rim (5), each bead comprising at least one annular reinforcing structure (70) having a radially innermost point (71),
two sidewalls (30) extending the beads radially outwards, the two sidewalls coming together in a crown (25) comprising a crown reinforcement (80, 90), radially surmounted by a tread (40);
a radial carcass reinforcement (60) composed of thread reinforcing elements (61) having an elongation at break $EB_C$ and a breaking strength $BS_C$, placed at a placement pitch $P_C$ and coated with rubber composition, the carcass reinforcement extending from one bead to the other, passing through the crown, the carcass reinforcement being anchored in each bead by a turn-up around the said at least one annular reinforcing structure, so as to form an outward strand (62) and a return strand (63), the carcass reinforcement being designed so as to satisfy the inequality:

$$\frac{BS_C}{P_C} \leq 1.5 \cdot 10^6 \cdot \frac{\left(R_S^2 - R_E^2\right)}{R_T},$$

where $BS_C$ is expressed in newtons, $R_S$ is the radial distance between the axis of rotation of the tyre and the radially outermost point (360) of the carcass reinforcement, $R_E$ is the radial distance between the axis of rotation of the tyre and the axial position where the tyre reaches its maximum axial width, and $R_T$ is the radial distance between the axis of rotation of the tyre and the radially innermost point of the said at least one annular reinforcing structure, the placement pitch $P_C$ and the radial distances $R_S$, $R_E$ and $R_T$ being expressed in metres;
each sidewall of the tyre additionally comprising an additional strengthening reinforcement (120) composed of thread reinforcing elements having an elongation at break $EB_A$ and a breaking strength $BS_A$, placed at a placement pitch $P_A$ and coated with a rubber composition, the additional strengthening reinforcement extending between a radially internal end (121) occurring close to the said at least one annular reinforcing structure of the bead which extends the sidewall and a radially external end (122) located radially between the carcass reinforcement and the crown reinforcement, in which $EB_A$, $BS_A$, $P_A$, $EB_C$, $BS_C$ and $P_C$ are chosen such that

$$\frac{BS_A}{P_A} \geq 1.3 \cdot \frac{BS_C}{P_C},$$

and

$$EB_C \geq EB_A,$$

it being specified that the breaking strengths $BS_A$ and $BS_C$ and the elongations at break $EB_C$ and $EB_A$ are determined on the reinforcing elements after extraction from the cured tyre,
the said airtight layer being, at least in part, covered with a layer (55) of self-sealing product.

2. Tyre according to Claim 1, in which the crown reinforcement (80, 90) has, in each radial cross section, two axial ends (180) and in which the radially external end (122) of each of the two additional strengthening reinforcements is axially inside the axial end of the closest crown reinforcement, the axial distance (DA) between the radially external end of each additional strengthening reinforcement and the axial end of the closest crown reinforcement being greater than or equal to 10 mm.

3. Tyre according to either one of Claims 1 and 2, in which the radially interior end (121) of each additional strengthening reinforcement (120) is radially inside the radially outermost point (64) of the return strand (63) of the carcass reinforcement (60) and the radial distance (DR) between the radially interior end (121) of each additional strengthening reinforcement and the radially outermost point (64) of the return strand of the carcass reinforcement is greater than or equal to 10 mm.

4. Tyre according to any one of Claims 1 to 3, in which each additional strengthening reinforcement (120) extends, in the bead (20), along the outward strand (62) of the carcass reinforcement (60).

5. Tyre according to Claim 4, in which the carcass reinforcement (60) and the additional strengthening reinforcement (120) each comprise at least one lap weld and in which the weld of the carcass reinforcement is offset, in the circumferential direction, with respect to the weld of the additional strengthening reinforcement.

6. Tyre according to any one of Claims 1 to 3, in which each additional strengthening reinforcement (120) extends, in the bead (20), along the return strand (63) of the carcass reinforcement (60).

7. Tyre according to any one of Claims 1 to 4, in which

the reinforcing elements of each additional strengthening reinforcement (120) are oriented radially.

**8.** Tyre according to any one of Claims 1 to 4, in which the reinforcing elements of each additional strengthening reinforcement (120) are inclined at an angle of between 40° and 80° and preferably between 40° and 50, with respect to the radial direction.

**9.** Tyre according to any one of Claims 1 to 7, in which the reinforcing elements of the additional strengthening reinforcement (120) are made of PET.

**10.** Tyre according to any one of Claims 1 to 7, in which the reinforcing elements of the additional strengthening reinforcement (120) are aramid/nylon hybrid cords.

**11.** Tyre according to any one of Claims 1 to 7, in which the reinforcing elements of the additional strengthening reinforcement (120) are cords made of aramid or aramid/PET hybrid cords.

**12.** Tyre according to any one of the preceding claims, in which the layer (55) of self-sealing product is positioned on the airtight layer (50) facing the crown.

**13.** Tyre according to Claim 12, in which the said layer of self-sealing product extends over the airtight layer facing at least a portion of the said sidewalls, so that, in each sidewall, the radially innermost point (56) of the layer (55) of self-sealing product occurs radially inside the radially external end (122) of the additional strengthening reinforcement (120).

**14.** Tyre according to any one of the preceding claims, in which the layer (55) of self-sealing product comprises at least (phr meaning parts by weight per hundred parts of elastomer) one thermoplastic styrene ("TPS") elastomer and more than 200 phr of an extending oil for the said elastomer.

**15.** Tyre according to Claim 14, in which the TPS is the predominant elastomer of the layer (55) of self-sealing product.

**16.** Tyre according to either one of Claims 14 and 15, in which the TPS elastomer is selected from the group consisting of styrene/butadiene/styrene (SBS), styrene/isoprene/styrene (SIS), styrene/isoprene/butadiene/styrene (SIBS), styrene/ethylene/butylene/styrene (SEBS), styrene/ethylene/propylene/styrene (SEPS) and styrene/ethylene/ethylene/propylene/styrene (SEEPS) block copolymers and the mixtures of these copolymers.

**17.** Tyre according to Claim 16, in which the TPS elastomer is selected from the group consisting of SEBS copolymers, SEPS copolymers and the mixtures of these copolymers.

**18.** Tyre according to any one of Claims 1 to 13, in which the layer (55) of self-sealing product comprises at least (phr meaning parts by weight per hundred parts of solid elastomer):

(a) as predominant elastomer, an unsaturated diene elastomer;
(b) between 30 and 90 phr of a hydrocarbon resin;
(c) a liquid plasticizer, the Tg (glass transition temperature) of which is less than -20°C, at a content by weight of between 0 and 60 phr; and
(d) from 0 to less than 120 phr of a filler.

**19.** Tyre according to Claim 18, in which the unsaturated diene elastomer is selected from the group consisting of polybutadienes, natural rubber, synthetic polyisoprenes, butadiene copolymers, isoprene copolymers and the mixtures of such elastomers.

**20.** Tyre according to Claim 19, in which the unsaturated diene elastomer is an isoprene elastomer, preferably selected from the group consisting of natural rubber, synthetic polyisoprenes and the mixtures of such elastomers.

**21.** Tyre according to Claim 19, in which the unsaturated diene elastomer is a blend of at least two solid elastomers, a polybutadiene or butadiene copolymer elastomer, referred to as "elastomer A", and a natural rubber or synthetic polyisoprene elastomer, referred to as "elastomer B", the elastomer A:elastomer B ratio by weight being within a range from 10:90 to 90:10.

**22.** Tyre according to Claim 21, in which the elastomer A:elastomer B ratio by weight is within a range from 20:80 to 80:20, preferably from 30:70 to 70:30.

**23.** Tyre according to any one of Claims 18 to 22, comprising from 0 to less than 100 phr of filler, preferably from 0 to less than 70 phr of filler, including from 0 to less than 15 phr of reinforcing filler, preferably from 0 to less than 10 phr of reinforcing filler.

**24.** Tyre according to any one of Claims 18 to 23, comprising from 0 to 70 phr of filler, including from 0 to less than 5 phr of reinforcing filler.

**25.** Tyre according to any one of Claims 18 to 24, comprising from 5 to 70 phr of filler other than a reinforcing filler, preferably from 5 to 30 phr.

**26.** Tyre according to any one of Claims 18 to 25, additionally comprising a crosslinking agent comprising

sulphur or a sulphur donor.

**27.** Tyre according to Claim 26, in which the sulphur donor is a thiuram polysulphide, preferably tetrabenzylthiuram disulphide (TBzTD).

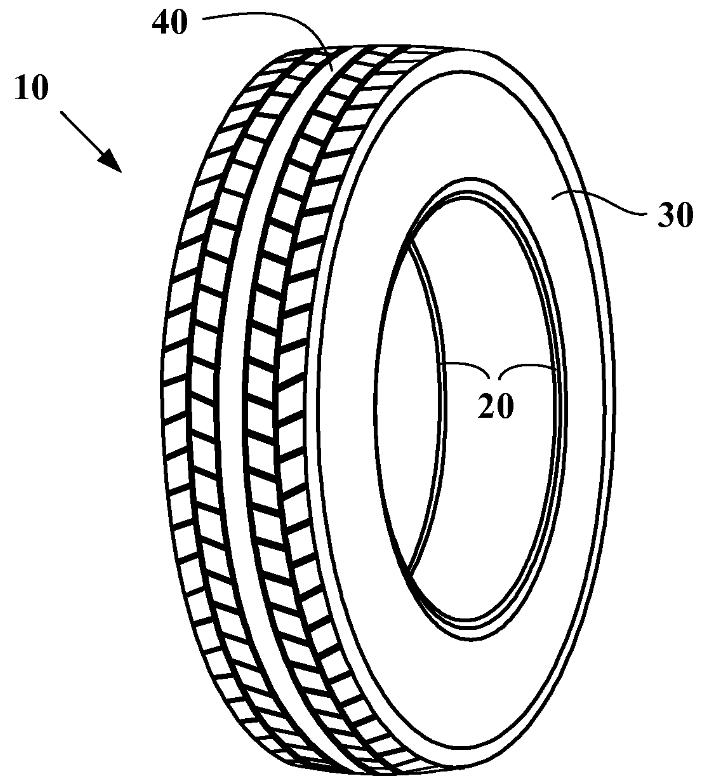


FIG. 1
(ART ANTERIEUR)

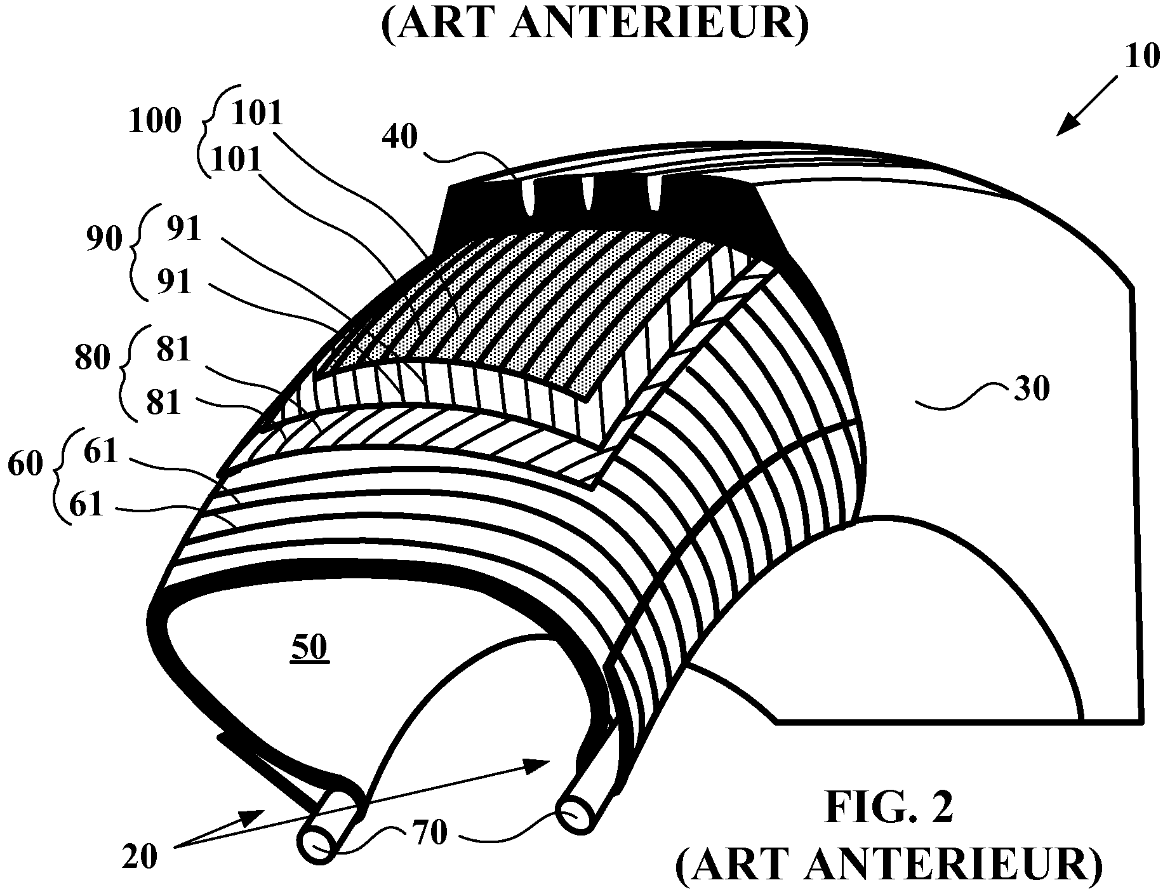


FIG. 2
(ART ANTERIEUR)

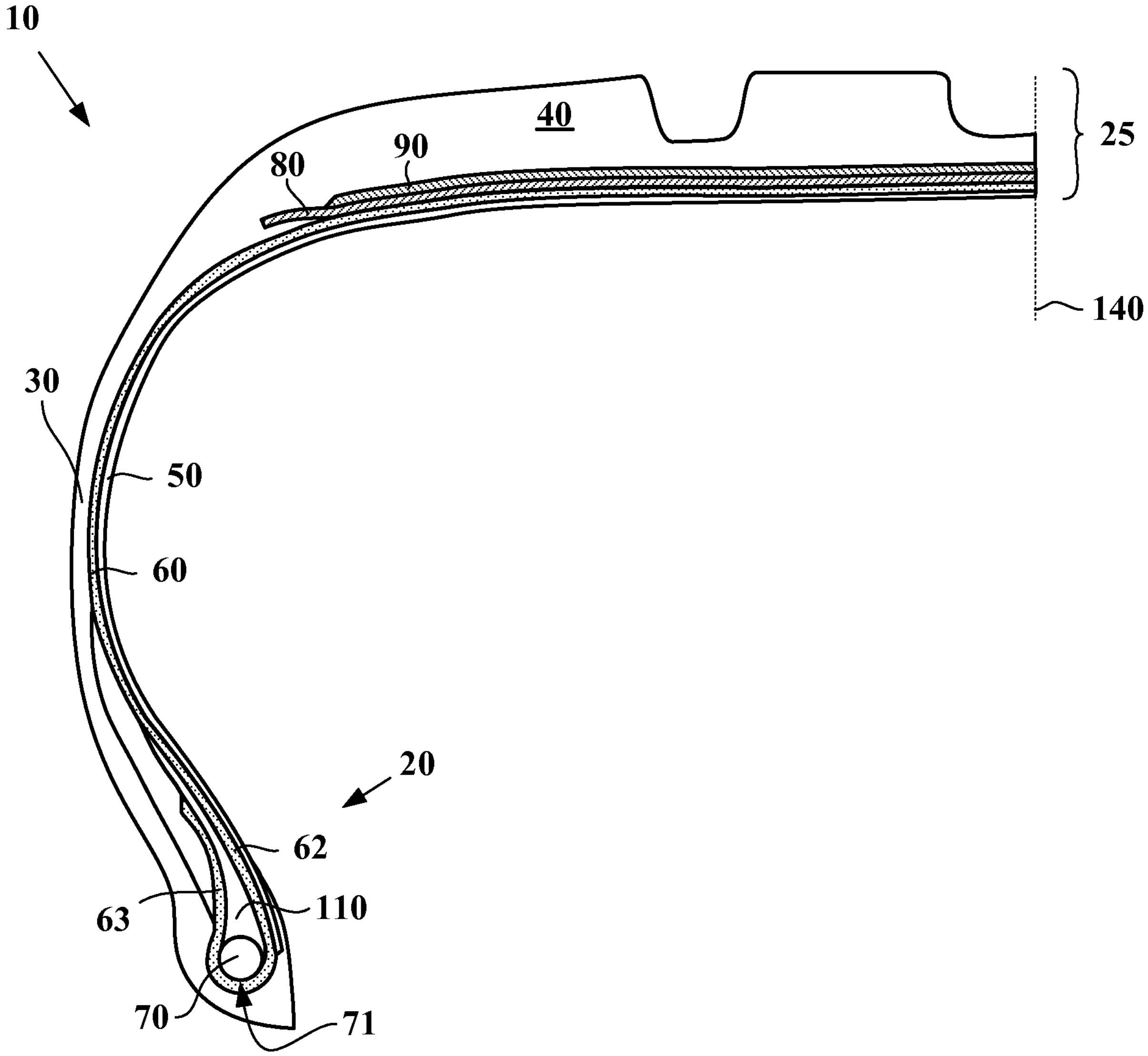


FIG. 3

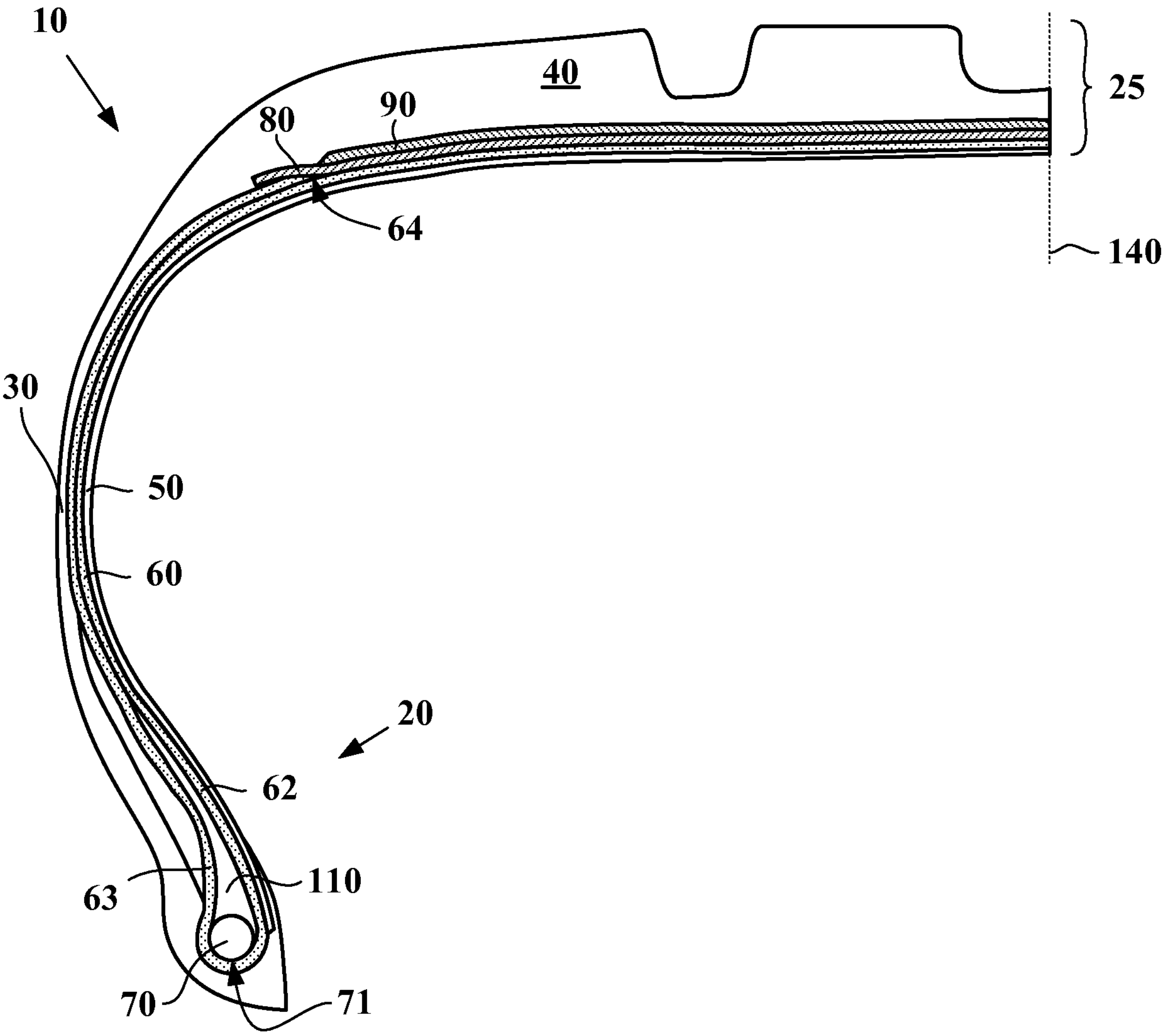


FIG. 4

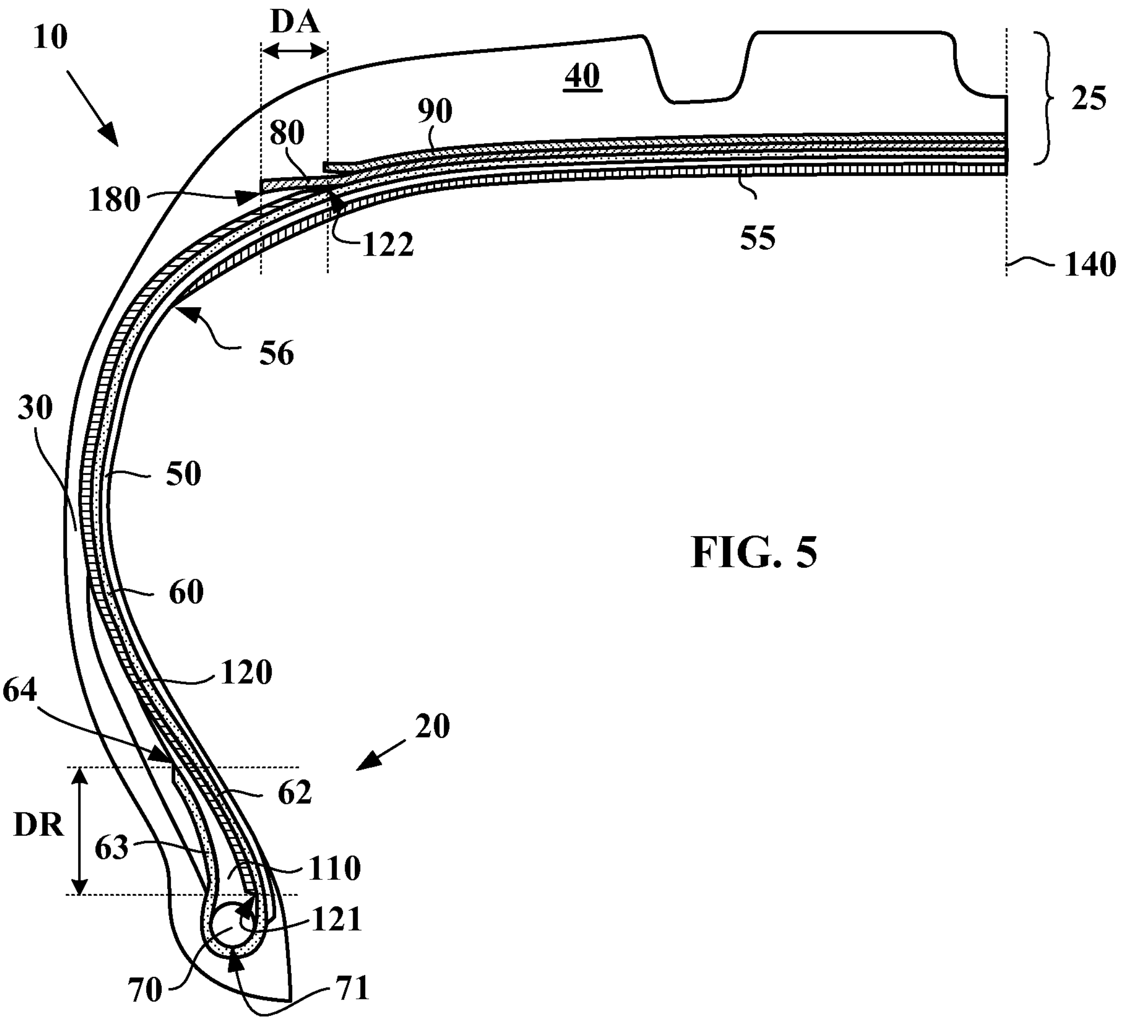
10
DA
40
25
90
80
180
122
55
140
56
30
50
60
120
64
20
62
DR
63
110
121
70
71

FIG. 5

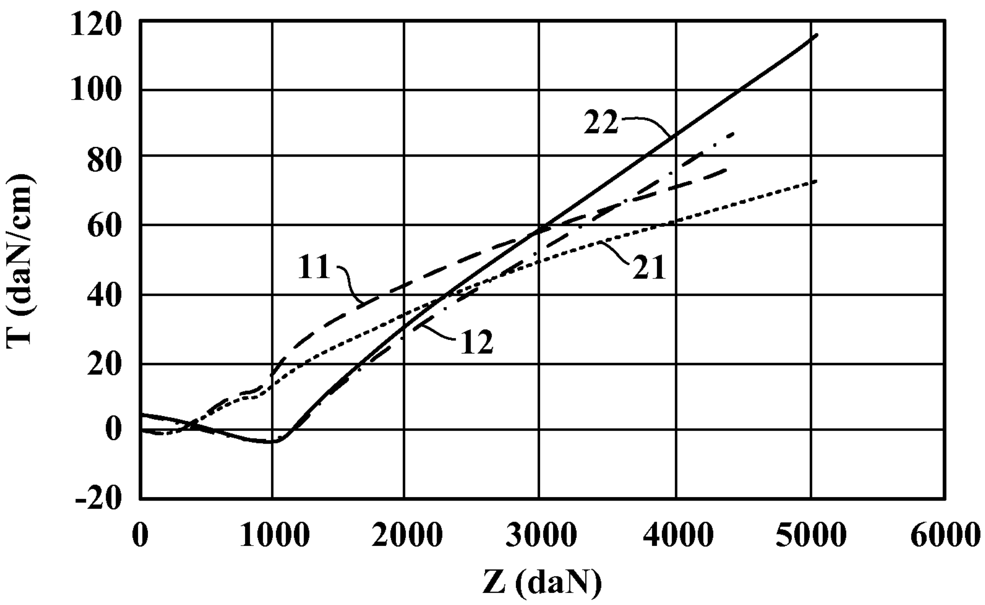
120
100
80
60
40
20
0
-20
0
1000
2000
3000
4000
5000
6000
T (daN/cm)
Z (daN)
22
11
21
12

FIG. 6

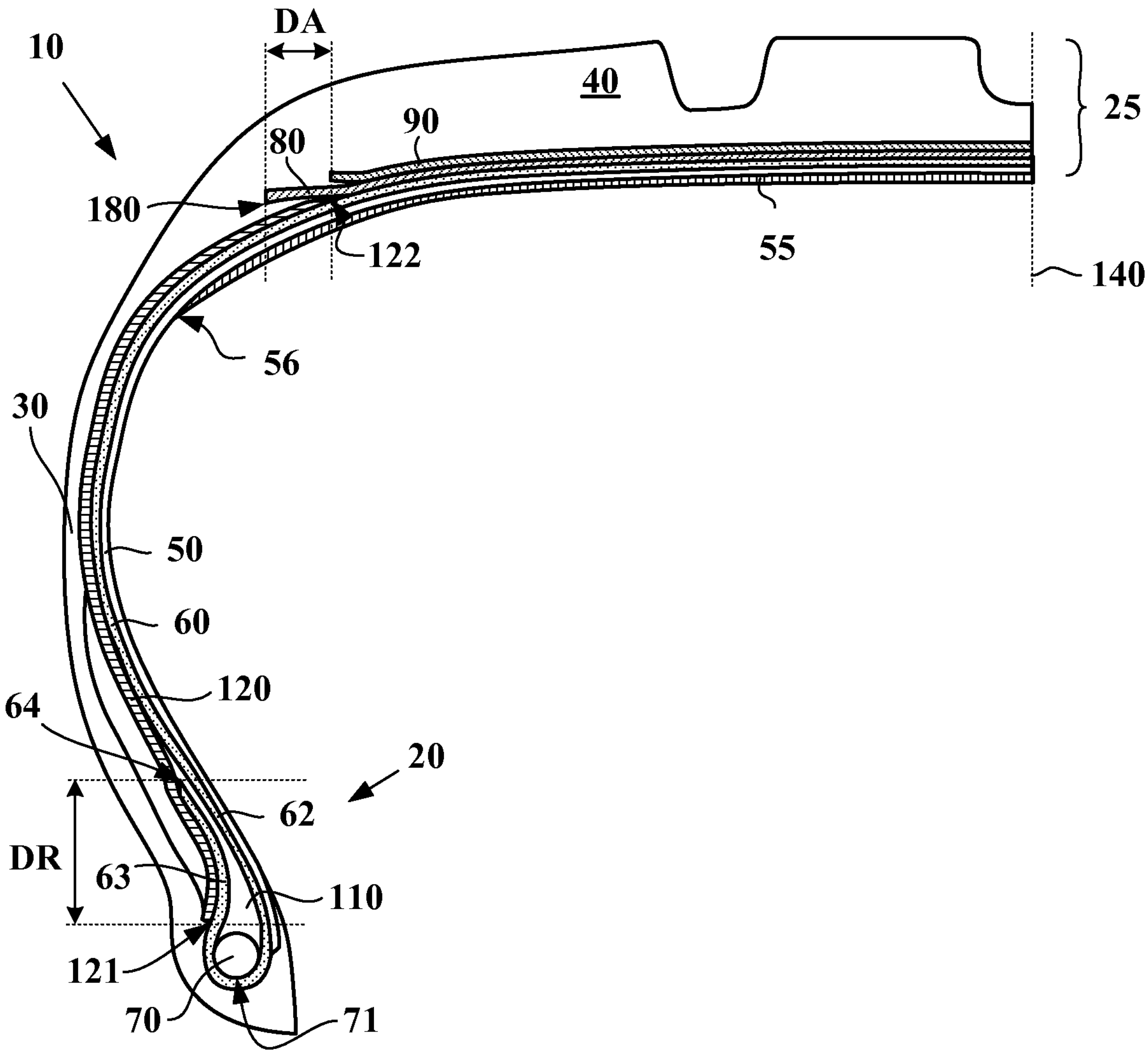
10
DA
40
25
90
80
180
122
55
140
56
30
50
60
120
64
20
62
DR
63
110
121
70
71

FIG. 7

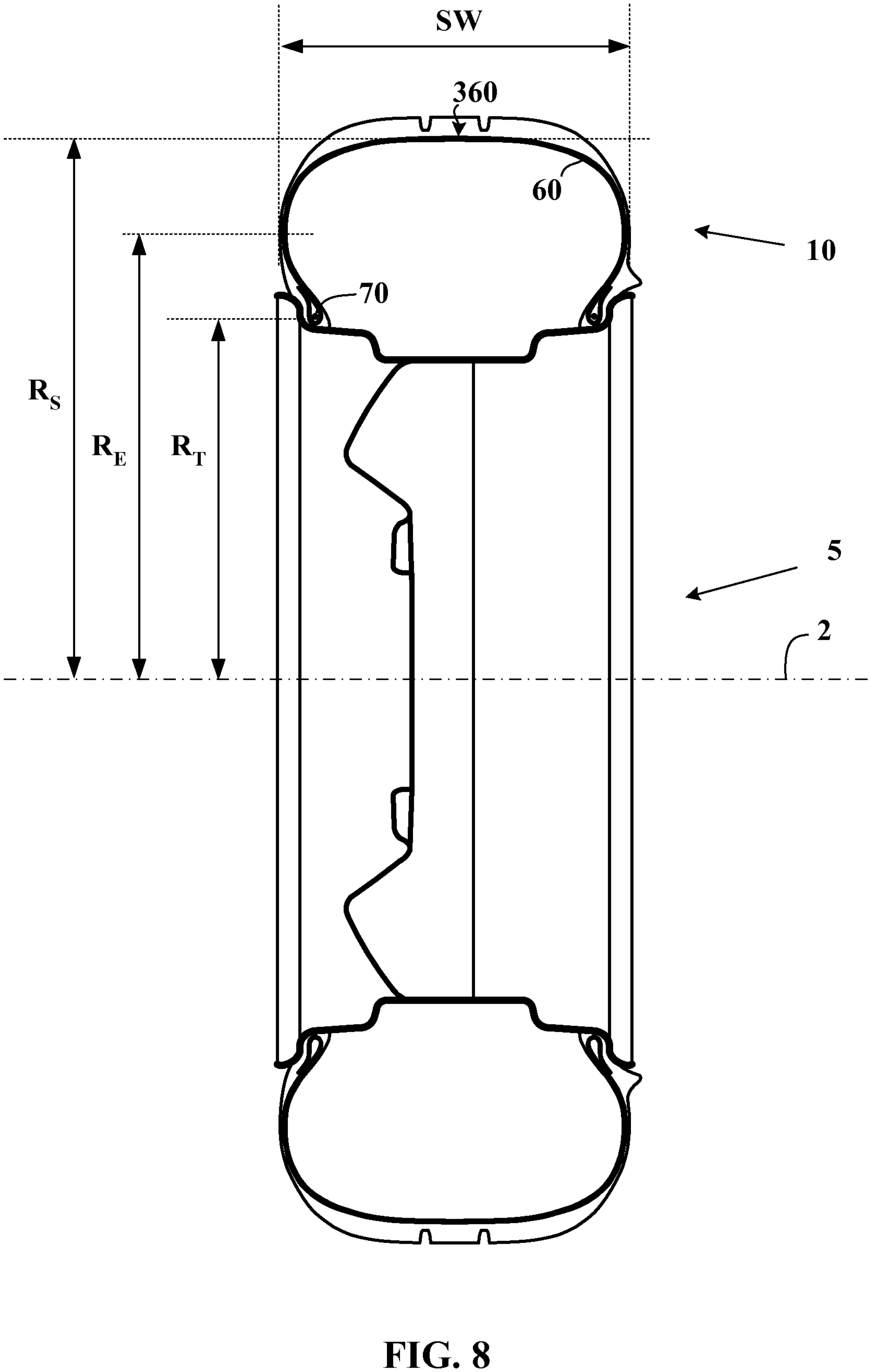


FIG. 8

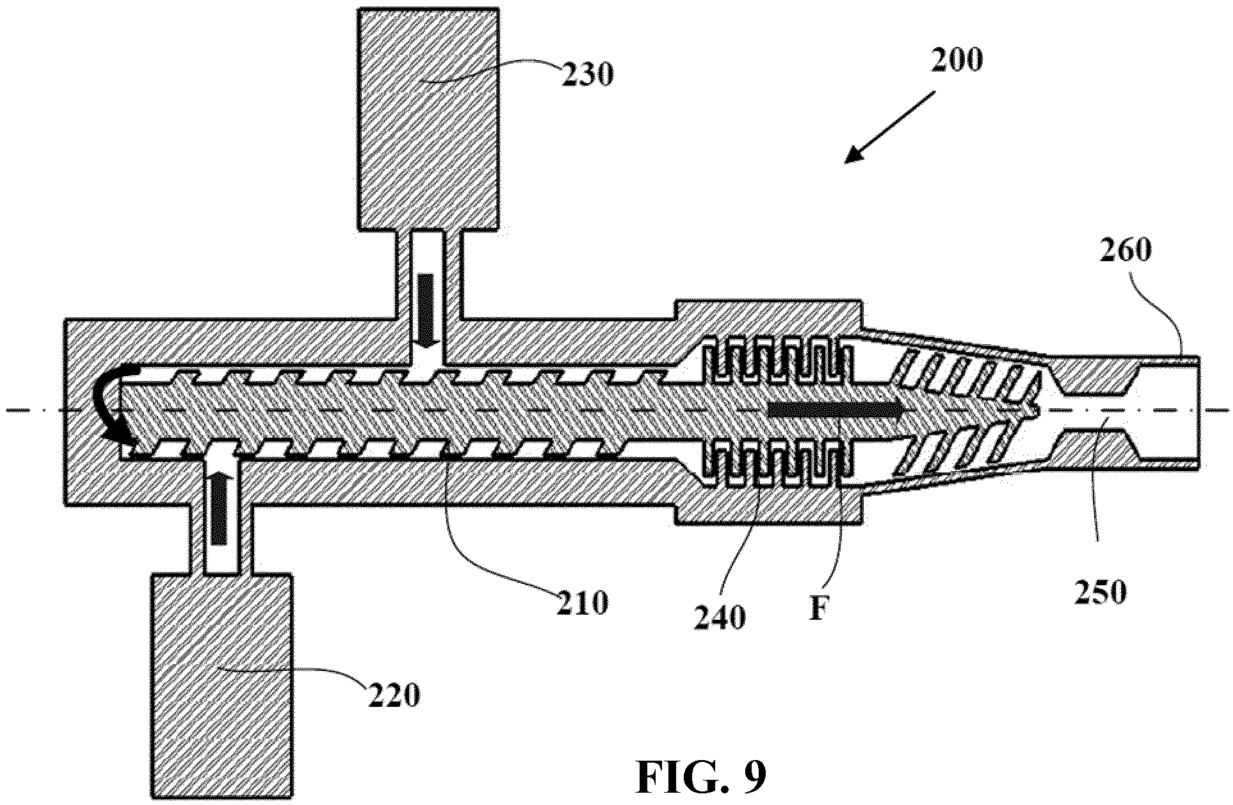


FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5916931 A
- WO 2008080556 A1
- WO 2002030689 A1
- EP 0673324 B1
- US 3509930 A
- FR 2910382
- FR 2910478
- FR 2925388
- US 6013718 A
- US 5977238 A
- US 6815473 B
- US 20060089445 A
- US 6503973 B
- WO 2009083160 A
- US 4913209 A
- US 5085942 A
- US 5295525 A
- WO 02088238 A
- US 20040127617 A
- WO 0005300 A
- WO 2011032886 A
- EP 0243851 A
- EP 0248301 A
- EP 0264600 A
- US 4895692 A


### Littérature non-brevet citée dans la description


- **R. MILDENBERG ; M. ZANDER ; G. COLLIN.** Hydrocarbon Resins. VCH, 1997